(19) Europäisches Patentamt / European Patent Office / Office européen des brevets

(11) **EP 4 742 791 A1**

(12) **EUROPEAN PATENT APPLICATION**
published in accordance with Art. 153(4) EPC

(43) Date of publication:
**13.05.2026 Bulletin 2026/20**

(21) Application number: **24835907.7**

(22) Date of filing: **19.06.2024**

(51) International Patent Classification (IPC):
**H04W 72/0446** (2023.01)     **H04W 24/10** (2009.01)
**H04W 28/04** (2009.01)       **H04W 28/18** (2009.01)
**H04W 72/1268** (2023.01)

(52) Cooperative Patent Classification (CPC):
**H04W 24/10; H04W 28/04; H04W 28/18;
H04W 72/0446; H04W 72/1268**

(86) International application number:
**PCT/JP2024/022281**

(87) International publication number:
**WO 2025/009394 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.07.2023 JP 2023110985**

(71) Applicant: **Panasonic Intellectual Property
Corporation
of America
Torrance, CA 90504 (US)**

(72) Inventors:
• **TAKATA, Tomofumi**
  **Kadoma-shi, Osaka 571-0057 (JP)**
• **URABE, Yoshio**
  **Kadoma-shi, Osaka 571-0057 (JP)**
• **IWAI, Takashi**
  **Kadoma-shi, Osaka 571-0057 (JP)**
• **MOTOZUKA, Hiroyuki**
  **Kadoma-shi, Osaka 571-0057 (JP)**

(74) Representative: **Grünecker Patent- und
Rechtsanwälte
PartG mbB
Leopoldstraße 4
80802 München (DE)**

(54) **ACCESS POINT, TERMINAL, AND COMMUNICATION METHOD**

(57)     An access point according to the present invention comprises: a control circuit that determines one control signal including information relating to a plurality of time resources used for transmitting each of a plurality of uplink response signals; and a transmission circuit that transmits the control signal.

FIG. 12

## Description

Technical Field

The present disclosure relates to an access point, a terminal, and a communication method.

Background Art

As a successor to IEEE 802.11ax (hereinafter, referred to as "11ax"), which is a standard of IEEE 802.11, the Institute of Electrical and Electronics Engineers (IEEE) is proceeding with the development of technical specifications for IEEE 802.11be (hereinafter, referred to as "11be"). 11ax is also referred to as "High Efficiency (HE)," and 11be is also referred to as "Extremely High Throughput (EHT)." In addition, in an Ultra High Reliability (UHR) Study Group (SG), discussions on requirements specification for a successor standard to 11be (hereinafter, referred to as "UHR") are in progress.

Citation List

Non-Patent Literature (hereinafter, referred to as "NPL")

NPL 1
IEEE 802.11-22/1923r1, Enhanced Trigger-Based Uplink Transmission
NPL 2
IEEE 802.11-22/1393r0, Latency Reduction Scheme for UHR
NPL 3
IEEE P802.11be/D3.0

Summary of Invention

However, a method for controlling signal transmission in radio communication such as a wireless Local Area Network (LAN) has not been sufficiently studied.

Anon-limiting embodiment of the present disclosure facilitates providing an access point, a terminal, and a communication method each capable of improving the efficiency of transmission control in radio communication.

An access point according to an embodiment of the present disclosure includes: control circuitry, which, in operation, determines one control signal including information related to a plurality of time resources used for transmission of a plurality of uplink response signals, respectively; and transmission circuitry, which, in operation, transmits the control signal.

It should be noted that general or specific embodiments may be implemented as a system, an apparatus, a method, an integrated circuit, a computer program, a storage medium, or any selective combination thereof.

According to an embodiment of the present disclosure, it is possible to improve the efficiency of transmission control in radio communication, for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a diagram illustrating an example of a Trigger frame;
FIG. 2 is a diagram illustrating an example of a Common Info field;
FIG. 3 is a diagram illustrating an example of a User Info field;
FIG. 4 is a diagram illustrating a configuration example of a Special User Info field;
FIG. 5 is a diagram illustrating an example of an Association ID (AID) 12 subfield;
FIG. 6 is a diagram illustrating an example of uplink orthogonal frequency division multiple access (OFDMA)-based random access (UORA);

FIG. 7 is a diagram illustrating an example of a PHY protocol data unit (PPDU);
FIG. 8 is a block diagram illustrating a configuration example of a part of an access point (AP);
FIG. 9 is a block diagram illustrating a configuration example of a part of a terminal;
FIG. 10 is a diagram illustrating an example of configuring a plurality of time resources;
FIG. 11 is another diagram illustrating the example of configuring a plurality of time resources;
FIG. 12 is still another diagram illustrating the example of configuring a plurality of time resources;
FIG. 13 is still another diagram illustrating the example of configuring a plurality of time resources;
FIG. 14 is still another diagram illustrating the example of configuring a plurality of time resources;
FIG. 15 is still another diagram illustrating the example of configuring a plurality of time resources;
FIG. 16 is still another diagram illustrating the example of configuring a plurality of time resources;
FIG. 17 is still another diagram illustrating the example of configuring a plurality of time resources;
FIG. 18 is still another diagram illustrating the example of configuring a plurality of time resources;
FIG. 19 is still another diagram illustrating the example of configuring a plurality of time resources;
FIG. 20 is a block diagram illustrating a configuration example of an AP;
FIG. 21 is a block diagram illustrating a configuration example of a terminal;
FIG. 22 is a diagram illustrating an example of a method for signaling a time resource;
FIG. 23 is another diagram illustrating the example of the method for signaling a time resource;
FIG. 24 is still another diagram illustrating the example of the method for signaling a time resource;
FIG. 25 is still another diagram illustrating the example of the method for signaling a time resource;
FIG. 26 is still another diagram illustrating the example of the method for signaling a time resource;
FIG. 27 is still another diagram illustrating the example of the method for signaling a time resource;
FIG. 28 is still another diagram illustrating the example of the method for signaling a time resource;
FIG. 29 is still another diagram illustrating the example of the method for signaling a time resource;
FIG. 30 is still another diagram illustrating the example of the method for signaling a time resource;
FIG. 31 is still another diagram illustrating the example of the method for signaling a time resource;
FIG. 32 is still another diagram illustrating the example of the method for signaling a time resource;
FIG. 33 is still another diagram illustrating the example of the method for signaling a time resource;
FIG. 34 is a diagram illustrating a configuration example of an uplink (UL) target received signal strength indicator (RSSI);
FIG. 35 is still another diagram illustrating the example of the method for signaling a time resource;
FIG. 36 is a diagram illustrating a configuration example of a Start Timing subfield;
FIG. 37 is a diagram illustrating a configuration example of a Length subfield;
FIG. 38 is a diagram illustrating configuration examples of Start Timing and Length;
FIG. 39 is a diagram illustrating an exemplary method for indicating a dedicated resource;
FIG. 40 is another diagram illustrating the exemplary method for indicating a dedicated resource;
FIG. 41 is still another diagram illustrating the exemplary method for indicating a dedicated resource;
FIG. 42 is a diagram illustrating an exemplary PPDU format;
FIG. 43 is another diagram illustrating the exemplary PPDU format;
FIG. 44 is still another diagram illustrating the exemplary PPDU format;
FIG. 45 is still another diagram illustrating the exemplary PPDU format;
FIG. 46 is a diagram illustrating an example of an available resource;
FIG. 47 is a block diagram illustrating a configuration example of a terminal;
FIG. 48 is a diagram illustrating an exemplary method for determining an available resource;
FIG. 49 is a diagram illustrating an exemplary method for controlling an OFDMA random access backoff (OBO) counter; and
FIG. 50 is another diagram illustrating the exemplary method for controlling the OBO counter.

Description of Embodiments

Hereinafter, embodiments of the present disclosure will be described in detail with reference to the accompanying drawings.

In UHR, in the instruction to transmit an uplink response signal using a control signal (hereinafter, referred to as "Trigger frame (TF)"), a method for instructing transmission of a plurality of uplink response signals using one Trigger frame has been proposed to reduce overhead caused by the Trigger frame transmission (for example, see NPL 1).

In addition, in UHR, in order to further reduce delays (low latency), application of an aggregated-PHY protocol data unit (A-PPDU) in a time domain has been discussed (for example, see NPL 2). In addition, in UHR, it has been proposed to support non-periodic, unpredictable, and dynamically changing traffic for which low latency is required (for example, also referred to as Event-based low latency traffic) (see, for example, NPL 3).

Hereinafter, the traffic for which low latency is required is referred to as "low latency (LL) traffic." Note that the traffic for which low latency is required may be referred to as, for example, low latency traffic or delay sensitive traffic, and may be traffic configured to be of an information type (for example, traffic identifier (TID)) treated as low latency traffic.

A configuration of a plurality of time resources (for example, transmission timing or transmission duration) and a method for signaling the plurality of time resources when transmission of a plurality of uplink response signals is indicated using one Trigger frame have not been studied.

In a non-limiting example of the present disclosure, a method for configuring a plurality of time resources and a method for signaling the plurality of time resources when transmission of the plurality of uplink response signals is indicated using one Trigger frame will be described.

For example, in an non-limiting example of the present disclosure, an access point (AP, or also referred to as "AP station (STA)" or "base station") uses a Trigger frame to instruct a terminal (STA, or also referred to as a "non-AP STA") to transmit a plurality of uplink response signals with different time resources (for example, different timings).

Note that, in UHR, resources different from each other in a frequency domain are each referred to as a "resource unit (RU)." In the following, resources different from each other in a time domain are each referred to as a "resource block (RB)." Note that the time resource is not limited to being referred to as an RB, and may be referred to by another name. In addition, resources different in the frequency domain and the time domain may be each referred to as an RB or by another name.

In addition, in the following, as an example, a method for indicating time resources (RB) of a plurality of uplink response signals using one Trigger frame by improving the control signal of 11ax and 11be will be described.

In the following, the control signal in 11ax and 11be will be described.

In 11ax and 11be, an AP transmits a Trigger frame to a terminal to instruct the terminal to transmit an uplink response signal. The Trigger frame includes a control signal including terminal-common information and terminal-specific information, and indicates uplink response transmission, as described below.

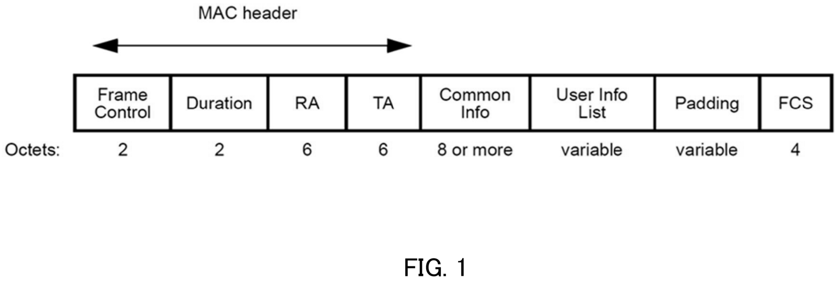

FIG. 1 is a diagram illustrating a configuration example of a Trigger frame. As illustrated in FIG. 1, the Trigger frame includes a field ("Common Info field") including information (for example, also referred to as terminal-common information) common to a plurality of terminals multiplexed in a frequency domain, and a field referred to as User Info List. The User Info List may include one or more fields ("User Info fields") that include information specific (or unique) to each of the plurality of terminals (for example, also referred to as terminal-specific information).

Further, for example, in 11be, the Trigger frame may include a field including information for a terminal supporting 11be (EHT) (for example, "Special User Info field") (not illustrated).

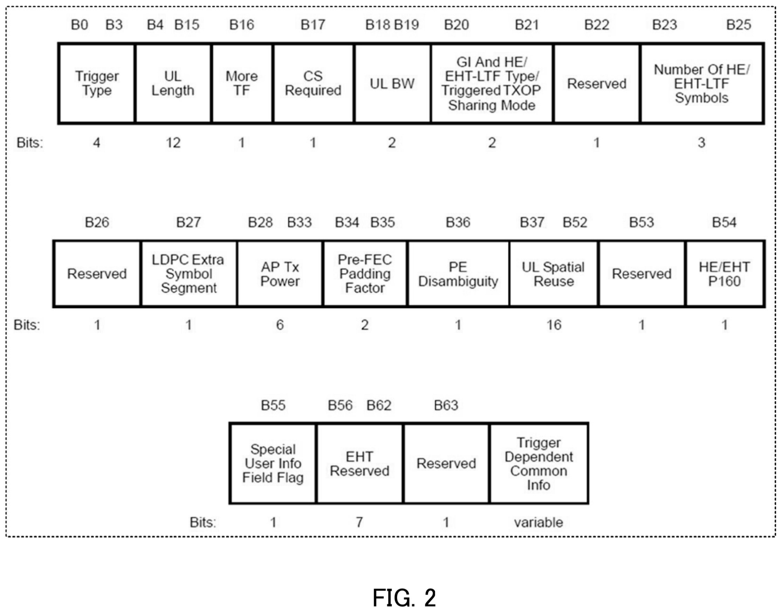

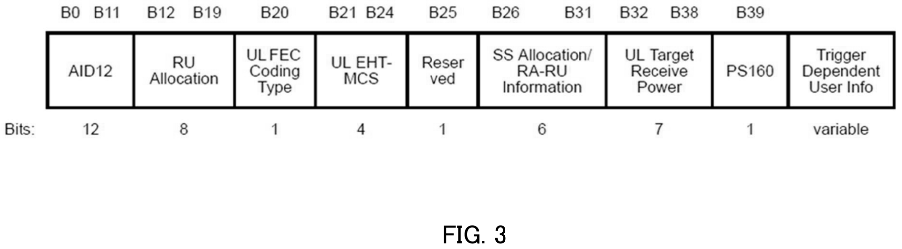

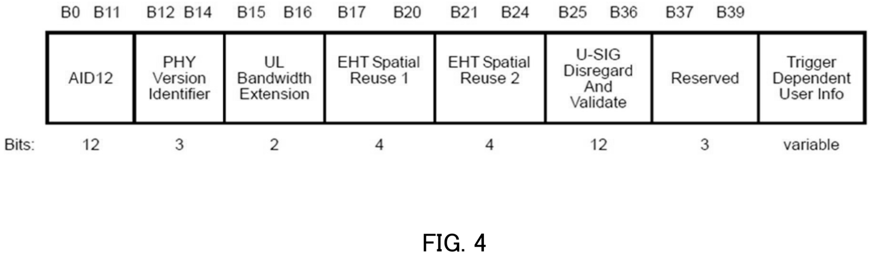

FIG. 2 is a diagram illustrating a configuration example of terminal-common information (Common Info field) discussed in 11be (for example, EHT) (for example, see NPL 3). In addition, FIG. 3 is a diagram illustrating a configuration example of terminal-specific information (User Info field) discussed in 11be (EHT) (for example, see NPL 3). Moreover, FIG. 4 is a diagram illustrating a configuration example of a Special User Info field (for example, see NPL 3).

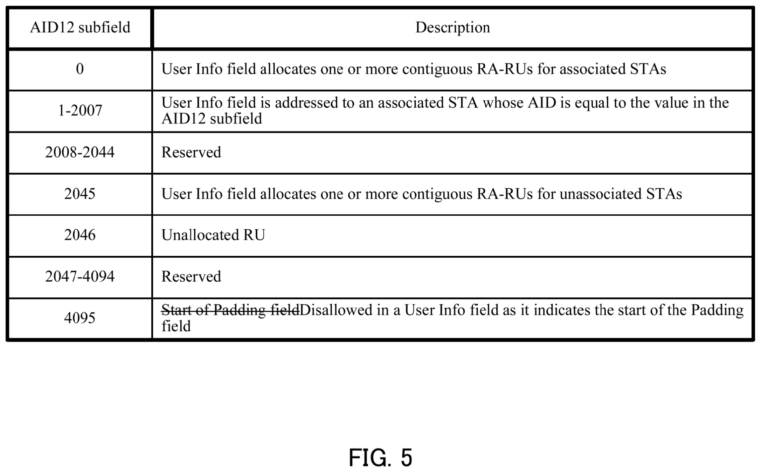

As illustrated in FIG. 3, the "AID12 subfield" in B0 to B11 of the User Info field specifies information (for example, association ID (AID)) for identifying a terminal to which a resource is allocated. FIG. 5 is a diagram illustrating an example of a relationship between the value of the AID12 subfield and the indication contents. As illustrated in FIG. 5, for specifying a terminal to which a resource is allocated, any of the values of AID12 = 1 to 2007 is configured. In addition, as illustrated in FIG. 5, for indicating selection of a resource (for example, RA-RU) based on random access (RA) without specifying a specific terminal, the value of AID12 = 0 or 2045 is configured (for example, see NPL 3).

Note that the random access is also referred to as, for example, uplink orthogonal frequency division multiple access (OFDMA)-based random access (UORA).

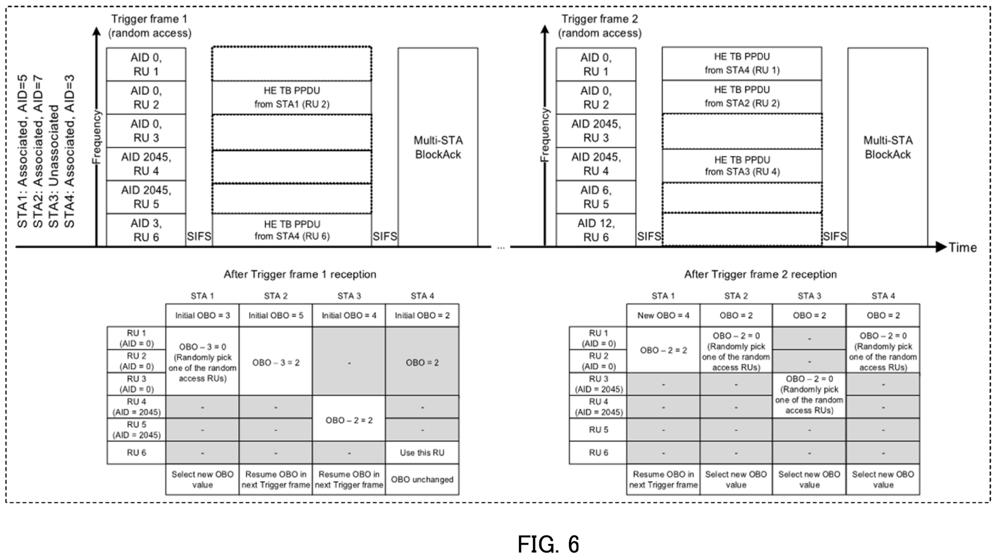

FIG. 6 is a conceptual diagram of a procedure of the UORA (for example, see NPL 3). In the UORA, the initial value of a backoff counter (for example, referred to as OFDMA random access backoff (OBO) counter) is randomly determined from values specified by an OFDMA contention window (OCW), and the OBO counter is subtracted according to the number of RUs specified as used for random access. When the OBO counter becomes 0, a terminal randomly selects one RU from RUs for random access (for example, RA-RU) specified by the Trigger frame, and transmits a response signal.

In addition, as illustrated in FIG. 3, the "RU Allocation subfield" in B12 to B19 of the User Info field specifies a position of the RU used for the uplink response signal.

In addition, the "Trigger Dependent Common Info subfield" in the Common Info field in FIG. 2, and the "Trigger Dependent User Info subfield" in the User Info field in FIG. 3 and the Special User Info field in FIG. 4 are subfields in which information to be indicated varies according to (or depending on) the "Trigger Type" indicating a type of the Trigger frame indicated in the "Trigger Type subfield" in B0 to B3 of the Common Info field in FIG. 2.

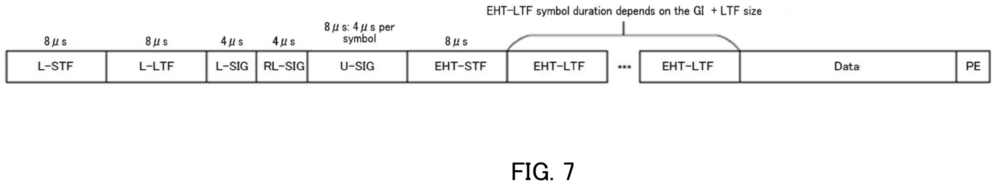

In a case where a terminal is instructed to transmit an uplink response signal (for example, also referred to as PPDU or uplink data signal) by the Trigger frame, the terminal transmits the uplink response signal using a Trigger based (TB)-PPDU format as illustrated in FIG. 7. FIG. 7 illustrates a format example of the uplink response signal (for example, TB-PPDU). Note that, in FIG. 7, fields from a Legacy-short Training field (L-STF) to a Universal SIGNAL field (U-SIG) are also referred to as a "Preamble." Alternatively, L-STF to EHT-LTF may be referred to as a Preamble.

In the non-limiting example of the present disclosure, an AP instructs a terminal to transmit a plurality of uplink response signals having different timings (for example, a plurality of time resources) using one Trigger frame. This makes it possible to indicate transmission of a plurality of uplink response signals with reduced overhead.

(Embodiment 1)

In the present embodiment, for example, a method and a signaling method for an AP to control transmission of a plurality of response signals (for example, a plurality of time resources) having different timings for a terminal, using one Trigger frame will be described. The control of indicating a plurality of time resources using one Trigger frame or the control in which a terminal recognizes the information indicated by the Trigger frame and selects one or a plurality of time resources from the plurality of time resources is referred to as "multiple time resource allocation control."

[Configuration of Radio Communication System]

The radio communication system according to the present embodiment may include, for example, AP 100 and terminal 200. In the radio communication system, two or more terminals 200 may be present in the radio communication system. In addition, a plurality of terminals 200 may have different functions (or support) per terminal 200, such as a terminal that supports standards up to 11be, and a terminal that supports standards up to 11be and a standard of UHR.

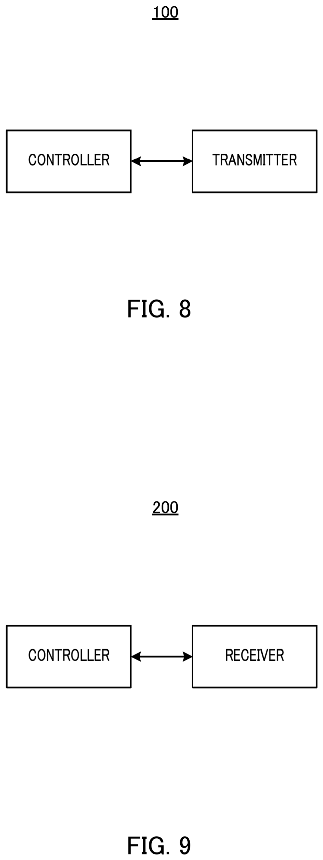

FIG. 8 is a block diagram illustrating a configuration example of a part of AP 100 according to an embodiment of the present disclosure. In AP 100 illustrated in FIG. 8, a controller (for example, corresponding to control circuitry) determines one control signal (for example, Trigger frame) including information related to a plurality of time resources (for example, RB) used for transmission of a plurality of uplink response signals, respectively. A transmitter (corresponding to, for example, transmission circuitry) transmits the control signal. Note that AP 100 may include a receiver (not illustrated). The receiver (for example, corresponding to reception circuitry) receives the uplink response signals.

FIG. 9 is a block diagram illustrating a configuration example of a part of terminal 200 according to an embodiment of the present disclosure. In terminal 200 illustrated in FIG. 9, a receiver (for example, corresponding to reception circuitry) receives one control signal (for example, Trigger frame) including information related to a plurality of time resources (for example, RB) used for transmission of a plurality of uplink response signals, respectively. A controller (for example, corresponding to control circuitry) controls transmission of the plurality of uplink response signals based on the control signal. Terminal 200 may include a transmitter (not illustrated). The transmitter (for example, corresponding to transmission circuitry) transmits the uplink response signals.

AP 100 transmits, for example, to terminal 200, a control signal (Trigger frame) including terminal-common information and terminal-specific information for indicating an uplink response signal. The Trigger frame may include, for example, control information for indicating a plurality of uplink responses with different time resources. For example, AP 100 determines one Trigger frame including information related to a plurality of time resources used for transmission of a plurality of uplink response signals, respectively, and transmits the Trigger frame to terminal 200.

Terminal 200 receives, for example, the one Trigger frame including information related to the plurality of time resources used for transmission of the plurality of uplink response signals, respectively, and controls transmission of the uplink response signals based on the Trigger frame. For example, terminal 200 transmits a response signal to AP 100 on one or a plurality of time resources (RB) based on the indication by the received Trigger frame.

A timing at which a response signal (for example, PPDU) is transmitted and a PPDU transmission duration (for example, also referred to as "LENGTH") may be determined by any of configurations or methods described later.

In addition, terminal 200 generates a response signal (PPDU) having a transmission duration determined based on any of configurations or methods described later, and transmits the response signal at the transmission timing on each time resource (RB).

Note that the response signal (PPDU) transmitted by terminal 200 on each time resource (RB) may be a TB-PPDU, a Multi-User (MU)-PPDU, a Null Data Packet (NDP), or a PPDU not including a legacy preamble (for example, L-STF, Legacy-long Training field (L-LTF), L-SIG, and Repeated L-SIG (RL-SIG)).

In addition, an example of a method for indicating the number of time resources (RB) (also referred to as the number of transmissions or the number of divisions) and which terminal 200 is assigned to each RB will be described later.

In the following, examples (Configuration Examples 1 to 7) of the timing of transmitting a PPDU indicated by the Trigger frame and the PPDU duration will be described. Note that, in the following configuration examples, a case will be described in which the number of RUs is 2 (RU0 and RU1) and the number of time resources (the number of RBs) is 2 (RB0 and RB1) as exemplary resources indicated by the Trigger frame.

[Configuration Example 1]

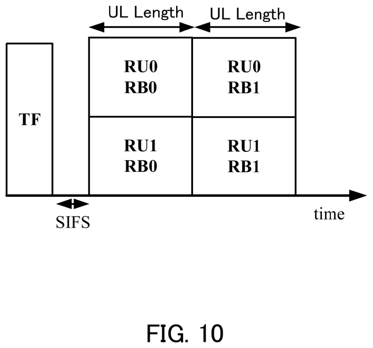

FIG. 10 illustrates an exemplary configuration of the transmission timing (for example, exemplary configuration of RU and RB) of a PPDU and the PPDU duration indicated by the Trigger frame (TF) in Configuration Example 1.

As illustrated in FIG. 10, a plurality of time resources (for example, RB0 and RB1) are composed of consecutive time periods after the Short Inter Frame Space (SIFS) duration from the resource on which the Trigger frame is transmitted.

As illustrated in FIG. 10, the duration of each of the plurality of time resources (or TB-PPDU duration transmitted on each time resource) is a duration indicated by a UL Length subfield of the Common Info field of the Trigger frame.

According to Configuration Example 1, by configuring the consecutive time resources, the resource utilization efficiency can be improved as compared to a case of leaving a time interval between the time resources.

[Configuration Example 2]

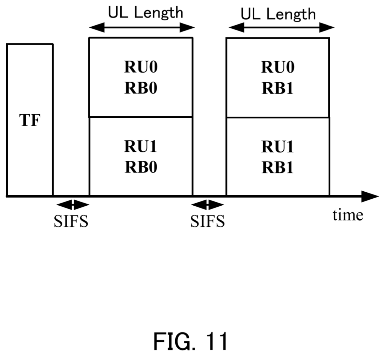

FIG. 11 illustrates an exemplary configuration of the transmission timing (for example, exemplary configuration of RU and RB) of a PPDU and the PPDU duration indicated by the Trigger frame (TF) in Configuration Example 2.

As illustrated in FIG. 11, a plurality of time resources (for example, RB0 and RB1) are composed of time periods separated by a defined time interval (for example, SIFS, IFS shorter than SIFS, or IFS longer than SIFS), after SIFS duration from the resource on which the Trigger frame is transmitted.

As illustrated in FIG. 11, the duration of each of the plurality of time resources (or TB-PPDU duration transmitted on each time resource) is a duration indicated by a UL Length subfield of the Common Info field of the Trigger frame.

According to Configuration Example 2, providing the defined time interval between the time resources allows terminal 200 to perform carrier sensing before transmitting a response signal using the subsequent time resource (RB1 in the example of FIG. 11). In a case where terminal 200 determines, by the carrier sensing, that another terminal is using the resource, terminal 200 stops the transmission using RB1, thereby suppressing interference to another terminal. In addition, when terminal 200 continuously transmits response signals using RB0 and RB1, a processing time for generating the transmission signal for RB1 can be secured.

[Configuration Example 3]

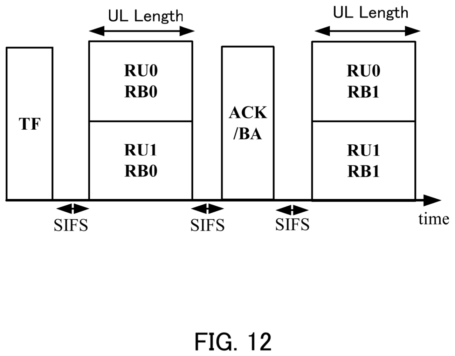

FIG. 12 illustrates an exemplary configuration of the transmission timing (for example, exemplary configuration of RU and RB) of a PPDU and the PPDU duration indicated by the Trigger frame (TF) in Configuration Example 3.

As illustrated in FIG. 12, a plurality of time resources (for example, RB0 and RB1) are composed of time periods separated by a defined time (for example, SIFS $\times$ 2) and an ACK/BA transmission time, after SIFS duration from the resource on which the Trigger frame is transmitted. As illustrated in FIG. 12, an ACK or a BA is positioned between the plurality of time resources indicated by the Trigger frame.

As illustrated in FIG. 12, the duration of each of the plurality of time resources (or TB-PPDU duration transmitted on each time resource) is a duration indicated by a UL Length subfield of the Common Info field of the Trigger frame.

According to Configuration Example 3, providing the resource for the ACK/BA between the plurality of time resources allows the ACK/BA to be transmitted in a short time without waiting for the plurality of time resources to elapse. As a result, retransmission control can be performed in a short time.

[Configuration Example 4]

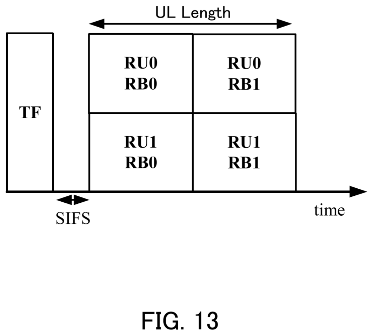

FIG. 13 illustrates an exemplary configuration of the transmission timing (for example, exemplary configuration of RU and RB) of a PPDU and the PPDU duration indicated by the Trigger frame (TF) in Configuration Example 4.

As illustrated in FIG. 13, a plurality of time resources (for example, RB0 and RB1) are composed of consecutive time periods after SIFS duration from the resource on which the Trigger frame is transmitted.

As illustrated in FIG. 13, the duration of each of the plurality of time resources (or TB-PPDU duration transmitted on each time resource) is a duration obtained by dividing the duration indicated by the UL Length subfield of the Common Info field of the Trigger frame by the number of time resources (2 in FIG. 13). That is, as illustrated in FIG. 13, the duration indicated by the UL Length subfield indicates the total duration of the plurality of time resources.

According to Configuration Example 4, as in Configuration Example 1, by configuring the consecutive time resources, the resource utilization efficiency can be improved as compared to a case of leaving a time interval between the time resources.

[Configuration Example 5]

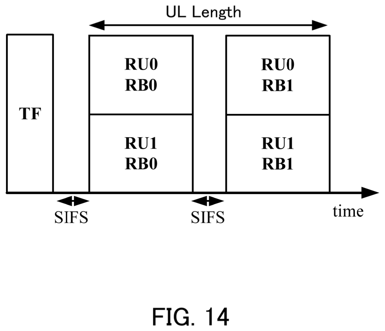

FIG. 14 illustrates an exemplary configuration of the transmission timing (for example, exemplary configuration of RU and RB) of a PPDU and the PPDU duration indicated by the Trigger frame (TF) in Configuration Example 5.

As illustrated in FIG. 14, a plurality of time resources (for example, RB0 and RB1) are composed of time periods separated by a defined time interval (for example, may be SIFS), after SIFS duration from the resource on which the Trigger frame is transmitted.

As illustrated in FIG. 14, the duration of each of the plurality of time resources (or TB-PPDU duration transmitted on each time resource) is a duration obtained by dividing, by the number of time resources (2 in FIG. 14), a duration calculated by subtracting a predetermined time (for example, SIFS) $\times$ (the number of time resources - 1) from the duration indicated by the UL Length subfield of the Common Info field of the Trigger frame.

According to Configuration Example 5, as in Configuration Example 2, providing the defined time interval between the time resources allows terminal 200 to perform carrier sensing before transmitting a response signal using the subsequent time resource (RB1 in the example of FIG. 14). In a case where terminal 200 determines, by the carrier sensing, that another terminal is using the resource, terminal 200 stops the transmission using RB1, thereby suppressing interference to another terminal. In addition, when terminal 200 continuously transmits the response signals using RB0 and RB1, a processing time for generating the transmission signal for RB1 can be secured.

[Configuration Example 6]

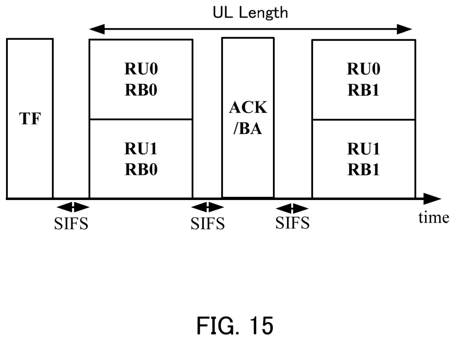

FIG. 15 illustrates an exemplary configuration of the transmission timing (for example, exemplary configuration of RU and RB) of a PPDU and the PPDU duration indicated by the Trigger frame (TF) in Configuration Example 6.

As illustrated in FIG. 15, a plurality of time resources (for example, RB0 and RB1) are composed of time periods separated by a defined time (for example, SIFS $\times$ 2) and an ACK/BA transmission time, after SIFS duration from the resource on which the Trigger frame is transmitted. As illustrated in FIG. 15, an ACK or a BA is positioned between the plurality of time resources indicated by the Trigger frame.

As illustrated in FIG. 15, the duration of each of the plurality of time resources (or TB-PPDU duration transmitted on each time resource) is a duration obtained by dividing, by the number of time resources (2 in FIG. 15), a duration calculated by subtracting a predetermined time (for example, SIFS) $\times$ (the number of time resources - 1) + ACK/BA duration $\times$ (the number of time resources - 1) from the duration indicated by the UL Length subfield of the Common Info field of the Trigger frame.

According to Configuration Example 6, as in Configuration Example 3, providing the resource for the ACK/BA between the plurality of time resources allows the ACK/BA to be transmitted in a short time without waiting for the plurality of time resources to elapse. As a result, retransmission control can be performed in a short time.

[Configuration Example 7]

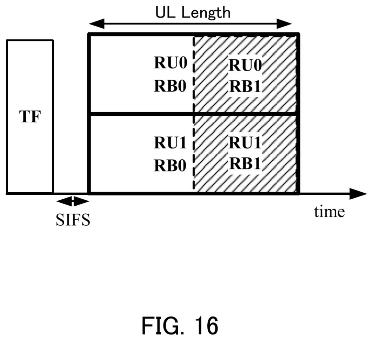

FIG. 16 illustrates an exemplary configuration of the transmission timing (for example, exemplary configuration of RU and RB) of a PPDU and the PPDU duration indicated by the Trigger frame (TF) in Configuration Example 7.

As illustrated in FIG. 16, a plurality of time resources (for example, RB0 and RB1) is configured by partially overlapping, after SIFS duration from the resource on which the Trigger frame is transmitted.

For example, in FIG. 16, the duration of the first time-resource (RB0) is the duration indicated by the UL Length subfield of the Common Info field of the Trigger frame, and the duration of the subsequent time resource (RB1) is a duration (UL Length/2 in FIG. 16) obtained by dividing the UL LENGTH by the number of time resources. As illustrated in FIG. 16, in a case where the start position (or first position) of the plurality of time resources is used as a reference (for example, 0), RB0 and RB1 overlap with each other in a range from UL Length/2 to UL Length in the plurality of time resources.

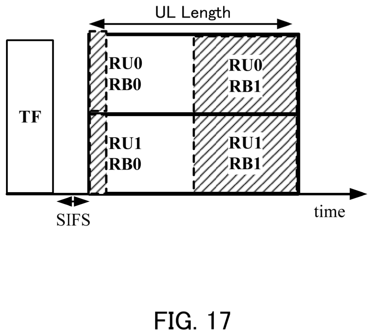

In Configuration Example 7, the UHR-LTF of the TB-PPDU transmitted on RB0 and the UHR-LTF of the TB-PPDU transmitted on RB1 are not orthogonal, and thus the channel estimation accuracy for spatial multiplexing possibly deteriorates. Then, in Configuration Example 7, as illustrated in FIG. 17, terminal 200 that transmits a response signal on any of the plurality of time resources may transmit a Preamble including UHR-LTF at a timing (for example, first time-resource) after SIFS from the Trigger frame. That is, the Preamble for the uplink response signal transmitted on each of the plurality of time resources (for example, RB0 and RB1) may be positioned in the first time-resource (for example, RB0) among the plurality of time resources, and need not be positioned in the time resource on which each uplink response signal is positioned.

In addition, terminal 200 that transmits a response signal on RB0 may transmit a mid-amble at a timing at which terminal 200 transmitting a response signal on RB1 transmits UHR-LTF. Note that a configuration in which the UHR-LTF is transmitted as the mid-amble may be adopted. In addition, terminal 200 may be configured to perform carrier sensing before transmitting the response signal on RB1, perform transmission on RB1 when another terminal does not perform transmission on RB0 (for example, the channel is in idle state), and not perform transmission on RB1 when another terminal performs transmission on RB0 (for example, the channel is in busy state).

As described above, in a case where a part of the time resources overlaps, by aligning part of the transmission timing of the UHR-LTF transmitted on each time resource, the channel estimation in consideration of spatial multiplexing can be performed, and the throughput can be improved by improving the channel estimation accuracy.

Note that the UHR-LTF is the same symbol as EHT-LTF, and may be referred to as EHT-LTF in the 11be (EHT) standard and may be referred to as UHR-LTF in the UHR standard.

The configuration examples 1 to 7 have been described above.

[Additional Notes on Configuration Examples 1 to 7]

Note that, in a case where a plurality of resources with different timings is indicated, which configuration among Configuration Examples 1 to 7 AP 100 uses to indicate transmission of a response signal may be defined by the specification, or AP 100 may switch the configuration to be used, by indicating the configuration to be used, to terminal 200 by using a Management frame or a Trigger frame.

In addition, in the Configuration Examples 1 to 7, the example has been described in which the number of time resources is the same for all frequency resources (or RUs), but the present disclosure is not limited thereto. For example, a method for configuring a plurality of time resources in the random-access resource (for example, resource indicated by the User Info field for which AID12 is 0 or 2045) and not configuring a plurality of time resources in other resources may be adopted.

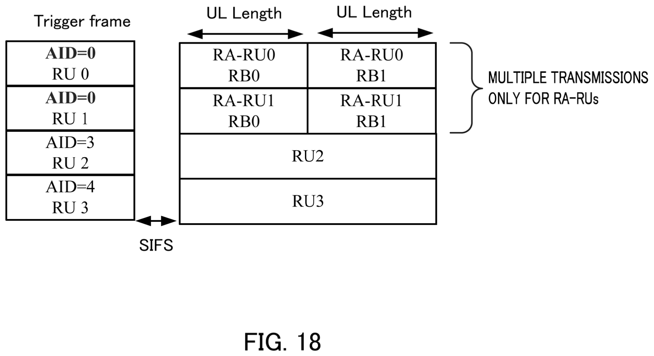

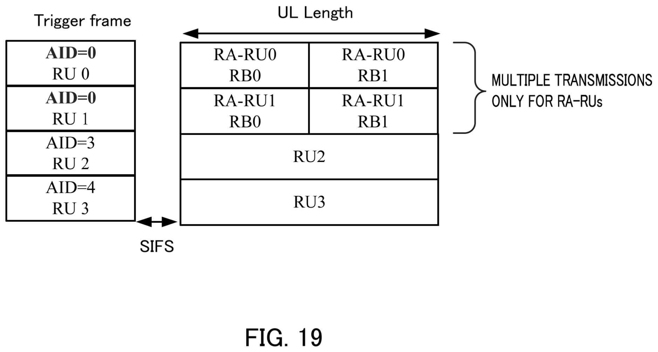

For example, as illustrated in FIG. 18, in the RA-RU, a plurality of time resources (for example, RB0 and RB1) may be configured as in Configuration Example 1, and the duration of each time resource may be configured to be the UL Length. In the RU different from the RA-RU, a single time resource may be configured, and the duration of the time resource may be configured to be the UL Length × the number of time resources. Alternatively, as illustrated in FIG. 19, in the RA-RU, a plurality of time resources (for example, RB0 and RB1) may be configured as in Configuration Example 4, and the duration of each time resource may be configured to be a duration obtained by dividing the UL Length by the number of time resources. In the RU different from the RA-RU, a single time resource may be configured, and the duration of the time resource may be configured to be the UL Length. Note that, in FIGS. 18 and 19, the examples have been described in which Configuration Example 1 and Configuration Example 4 are applied, but the configuration of the plurality of time resources is not limited thereto, and any of Configuration Examples 2, 3, and 5 to 7 may be applied.

In addition, for example, the number of time resources (or the number of transmissions) may be individually configured for each RU. For the time resource duration in this case, the shortest time resource duration may be used as the UL Length, the longest time resource duration may be used as the UL Length, or the duration of another time resource may be used as the UL Length.

In addition, in a case where the number of time resources (or the number of transmissions) is different for each RU, a configuration may be adopted in which the number of time resources differs for RU sizes in multiple of 20 MHz. For example, the Preamble is transmitted in units of 20 MHz, and thus configuring the number of time resources in units of 20 MHz suppresses interference of the Preamble to another band. Note that the unit (or Preamble transmission unit) for configuring the number of time resources is not limited to 20 MHz, and may be another bandwidth.

In addition, in the configuration examples in which the defined time interval is provided before the transmission of the RB and/or before the transmission of the ACK/BA as in Configuration Examples 2, 3, 5, and 6, terminal 200 and/or another terminal may be allowed to perform transmission at an interval shorter than the defined time interval when terminal 200 and/or the other terminal has transmission data with high priority (for example, low latency transmission is required) (in other words, to interrupt the transmission before RB1, which is called preemption). For example, AP 100 may transmit a Trigger frame by including information (for example, subfield) indicating whether to allow preemption in the Trigger frame.

In addition, a legacy terminal (for example, terminal that supports standards up to 11be) or a UHR terminal (for example, terminal that supports UHR) that does not support the multiple time resource allocation control, does not recognize the presence of the plurality of resources even when the plurality of time resources are indicated by the Trigger frame. These terminals can transmit a TB-PPDU with one UL Length. Thus, when a plurality of time resources is indicated by the Trigger frame, the legacy terminal and the terminal that is a UHR terminal and does not support the multiple time resource allocation control may transmit one response signal using the time resource having the indicated UL Length. For example, in the case of Configuration Example 1 (FIG. 10), a terminal transmits a TB-PPDU using RB0. In addition, for example, in the case of Configuration Example 4 (FIG. 13), one TB-PPDU is transmitted using the time resources of RB0 and RB1. Note that the UHR terminal may indicate to AP 100 whether multiple time resource allocation control is possible (whether to support the control), by including the information in Capability information.

[Configuration Example of AP 100]

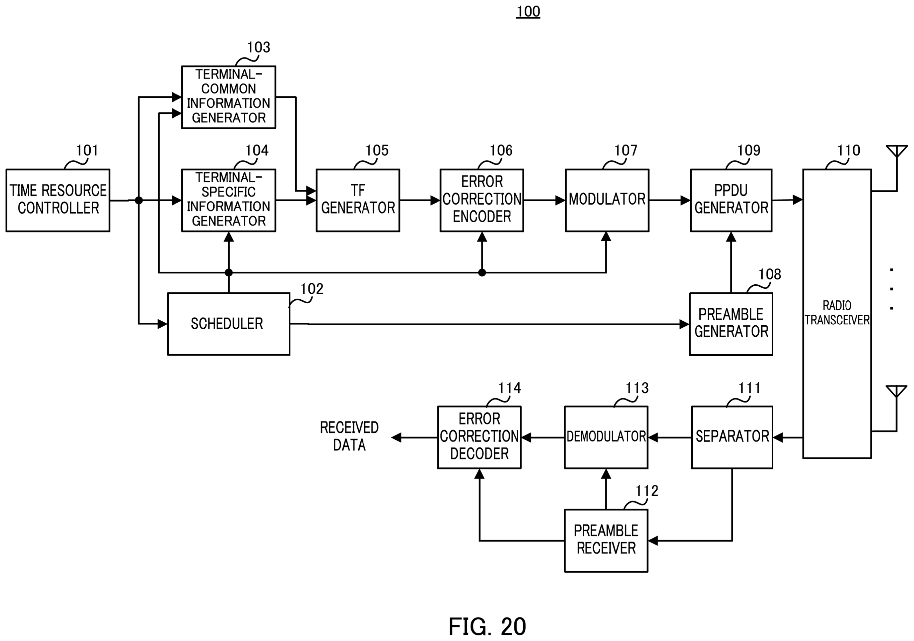

FIG. 20 is a block diagram illustrating a configuration example of AP 100.

AP 100 transmits control information (for example, Trigger frame) including terminal-common information and terminal-specific information to terminal 200. The Trigger frame may include, for example, control information for indicating a plurality of time resources.

AP 100 illustrated in FIG. 20 may include, for example, time resource controller 101, scheduler 102, terminal-common information generator 103, terminal-specific information generator 104, TF generator 105, error correction encoder 106, modulator 107, Preamble generator 108, PPDU generator 109, radio transceiver 110, separator 111, Preamble receiver 112, demodulator 113, and error correction decoder 114.

Note that at least one of time resource controller 101, scheduler 102, terminal-common information generator 103, terminal-specific information generator 104, TF generator 105, error correction encoder 106, modulator 107, Preamble generator 108, PPDU generator 109, separator 111, Preamble receiver 112, demodulator 113, and/or error correction decoder 114 illustrated in FIG. 20 may be included in the controller illustrated in FIG. 8, and radio transceiver 110 illustrated in FIG. 20 may be included in the transmitter illustrated in FIG. 8.

In FIG. 20, time resource controller 101 controls, for example, a configuration related to a time resource. For example, time resource controller 101 may determine a setting (or configuration) related to a time resource common to all RUs, a time resource of each of RA-RU (for example, resource for random access) and RU (for example, resource other than the resource for random access), or a time resource for each RU. The setting related to a time resource may include, for example, a transmission timing, the number of time resources, and a configuration of a PPDU duration, and any of the above-described Configuration Examples 1 to 7 may be applied. For example, the number of time resources may be determined based on at least one of the allowable delay amount for the traffic held by each terminal 200, the number of terminals connected to (associated with) AP 100, and/or a buffer size of each terminal 200. Time resource controller 101 outputs information related to the determined time resource to scheduler 102, terminal-common information generator 103, and terminal-specific information generator 104.

Scheduler 102 may perform, for example, scheduling for terminal 200. For example, scheduler 102 may assign terminal 200 for each frequency resource and time resource based on the information input from time resource controller 101. In addition, for example, scheduler 102 may determine scheduling information for uplink signals for one or more terminals including terminal 200, based on reception quality information, a transmission buffer state, terminal capability information, and the like fed back from terminal 200. In addition, scheduler 102 may allocate a plurality of time resources to the same terminal 200. In addition, when applying random access, scheduler 102 determines scheduling information for random access.

The scheduling information may include, for example, a transmission parameter such as information related to a radio resource (for example, including at least one of transmission band, time resource, or signal length) allocated to terminal 200 and a Modulation and Coding Scheme (MCS) applied to an uplink signal. The transmission band assigned to terminal 200 may be configured to be at least a part of the transmission band of the downlink PPDU including a Trigger frame.

Scheduler 102 outputs the determined scheduling information on terminal 200 to terminal-common information generator 103, terminal-specific information generator 104, error correction encoder 106, modulator 107, and Preamble generator 108.

Terminal-common information generator 103 may generate, for example, control information included in a Common Info field (for example, FIG. 2) common to a plurality of terminals including terminal 200 and control information included in a Special User Info field (for example, FIG. 4) common to a plurality of terminals with a predetermined PHY version. For example, terminal-common information generator 103 may generate control information related to a time resource in response to the information (or indication) input from time resource controller 101 or scheduler 102. Examples of the control information related to a time resource will be described later. Terminal-common information generator 103 outputs the generated control information (for example, information related to the Common Info field and the Special User Info field) to TF generator 105.

Terminal-specific information generator 104 may generate control information included in a User Info field (for example, FIG. 3) specific to terminal 200, for example. For example, terminal-specific information generator 104 may generate information related to the User Info field specific to terminal 200 based on the scheduling information input from scheduler 102 and a predetermined format, and generate information related to a User Info List including the User Info field for each of the plurality of terminals 200. In addition, terminal-specific information generator 104 may generate control information related to a time resource in response to the information (or indication) input from time resource controller 101. Examples of the control information related to a time resource will be described later. Terminal-specific information generator 104 outputs the generated control information (for example, information related to the User Info List) to TF generator 105.

TF generator 105 may generate, for example, a Trigger frame including the control information input from terminal-common information generator 103 (for example, information related to the Common Info field and the Special User Info field) and the control information input from terminal-specific information generator 104 (for example, information related to the User Info List including at least one User Info field), based on the format illustrated in FIG. 1. The Trigger frame may include, for example, at least one of a MAC header, Padding, or a frame check sequence (FCS) in addition to the Common Info field and the User Info List. TF generator 105 outputs the generated Trigger frame to error correction encoder 106, for example.

Error correction encoder 106 performs error correction encoding on the Trigger frame input from TF generator 105. In addition, in the case of simultaneously transmitting the Trigger frame and data, error correction encoder 106 performs error correction encoding on a data signal obtained by combining the Trigger frame and the data in Medium Access Control (MAC). Error correction encoder 106 outputs the encoded signal to modulator 107. Note that the coding rate of the data signal in error correction encoder 106 may be determined based on, for example, the scheduling information input from scheduler 102.

Modulator 107 modulates, for example, the signal input from error correction encoder 106 and outputs the modulated signal to PPDU generator 109. Note that the modulation scheme applied in modulator 107 may be determined based on, for example, the scheduling information input from scheduler 102.

In addition, in a case where the modulated signal is an orthogonal frequency division multiplexing (OFDM) signal, AP 100 may form the OFDM signal by performing Inverse Discrete Fourier Transform (IDFT) processing after mapping the modulated signal to a predetermined frequency resource and adding a cyclic prefix (CP).

Preamble generator 108 generates a Preamble to be added to the data for terminal 200 based on the scheduling information from scheduler 102. The Preamble includes, for example, information used by terminal 200 to receive and decode the data. Preamble generator 108 outputs the generated Preamble signal to PPDU generator 109.

PPDU generator 109 generates a single PPDU signal obtained by time-multiplexing the Preamble signal from Preamble generator 108 and the modulated signal from modulator 107 (for example, the Preamble signal and the modulated signal (OFDM signal) are time-multiplexed in this order), and outputs the PPDU signal to radio transceiver 110.

Radio transceiver 110 performs radio transmission processing such as D/A conversion and up-conversion to a carrier frequency on the PPDU signal input from PPDU generator 109, and transmits the signal after the radio transmission processing via antennas.

In addition, radio transceiver 110 receives a signal via the antennas, for example, performs radio reception processing such as down-conversion to a baseband and A/D conversion on the received signal, and outputs the signal after the radio reception processing to separator 111.

Separator 111 separates, for example, the signal (PPDU) input from radio transceiver 110 into a Preamble signal and a data signal, outputs the Preamble signal to Preamble receiver 112, and outputs the data signal to demodulator 113.

Preamble receiver 112 demodulates and decodes the Preamble signal from separator 111, and in the case where the signal is addressed to AP 100, instructs demodulator 113 and error correction decoder 114 to decode the data, and outputs control information (for example, MCS) used for the decoding to demodulator 113 and error correction decoder 114.

Demodulator 113 performs demodulation processing on the received data input from separator 111, and outputs the demodulated signal to error correction decoder 114. Note that the modulation scheme applied in demodulator 113 may be determined based on, for example, the control information input from Preamble receiver 112.

In addition, in a case where the signal input to demodulator 113 is an OFDM signal, AP 100 may perform CP removal processing and DFT processing on the OFDM signal.

Error correction decoder 114 decodes the demodulated signal input from demodulator 113, for example, and outputs the decoded signal as a received data signal. Note that the coding rate applied in error correction decoder 114 may be determined based on, for example, the control information input from Preamble receiver 112. In addition, the received data signal may include, for example, an ACK response (for example, Block Ack (BA)) from terminal 200 or LL traffic from terminal 200.

[Configuration Example of terminal 200]

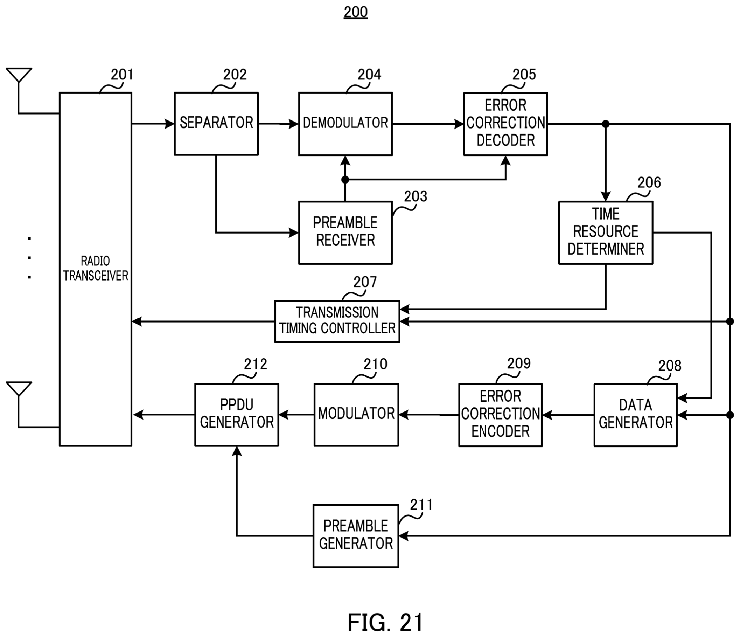

FIG. 21 is a block diagram illustrating a configuration example of terminal 200.

Terminal 200 illustrated in FIG. 21 may include, for example, radio transceiver 201, separator 202, Preamble receiver 203, demodulator 204, error correction decoder 205, time resource determiner 206, transmission timing controller 207, data generator 208, error correction encoder 209, modulator 210, Preamble generator 211, and PPDU generator 212.

At least one of separator 202, Preamble receiver 203, demodulator 204, error correction decoder 205, time resource determiner 206, transmission timing controller 207, data generator 208, error correction encoder 209, modulator 210, Preamble generator 211, and/or PPDU generator 212 illustrated in FIG. 21 may be included in the controller illustrated in FIG. 9, and radio transceiver 201 illustrated in FIG. 21 may be included in the receiver illustrated in FIG. 9.

In FIG. 21, radio transceiver 201 receives a signal via antennas, for example, performs radio reception processing such as down-conversion and A/D conversion on the received signal, and outputs the signal after the radio reception processing to separator 202.

In addition, radio transceiver 201 performs radio transmission processing such as up-conversion and D/A conversion on the signal input from PPDU generator 212, and transmits the signal after the radio transmission processing from the antennas. Note that radio transceiver 201 controls the transmission timing of each PPDU signal based on information on the transmission positions (or transmission timings) of the plurality of time resources input from transmission timing controller 207. In addition, radio transceiver 201 performs carrier sensing based on the indication of the Trigger frame, for example, and in a case where the carrier sense result for a predetermined time indicates idle, transmits the signal generated in PPDU generator 212 to AP 100 from the antennas.

Separator 202 separates, for example, the signal (PPDU) input from radio transceiver 201 into a Preamble signal and a data signal, outputs the Preamble signal to Preamble receiver 203, and outputs the data signal to demodulator 204.

Preamble receiver 203 demodulates and decodes the Preamble signal from separator 202, and in the case where the signal is addressed to terminal 200, instructs demodulator 204 and error correction decoder 205 to decode the data, and outputs control information (for example, MCS) used for the decoding to demodulator 204 and error correction decoder 205.

Demodulator 204 performs demodulation processing on the received data input from separator 202, for example, and outputs the demodulated signal to error correction decoder 205. Note that the modulation scheme applied in demodulator 204 may be determined based on, for example, the control information (for example, scheduling information) input from Preamble receiver 203.

In addition, in a case where the signal input to demodulator 204 is an OFDM signal, terminal 200 may perform CP removal processing and DFT processing on the OFDM signal.

Error correction decoder 205 decodes, for example, the demodulated signal input from demodulator 204, and in a case where the decoded signal includes a Trigger frame, outputs the control information included in the Trigger frame to time resource determiner 206, transmission timing controller 207, data generator 208, and Preamble generator 211. Note that the coding rate applied in error correction decoder 205 may be determined based on, for example, the control information (for example, scheduling information) input from Preamble receiver 203.

Time resource determiner 206 determines the time resource on which terminal 200 can transmit, based on the control information included in the Trigger frame input from error correction decoder 205. For example, time resource determiner 206 may select the time resource for which the AID of terminal 200 is specified. Alternatively, in the case of the resource for random access, time resource determiner 206 may perform OBO control, and may select a resource for random access when the OBO counter becomes 0. When data transmission is possible based on the determination result, time resource determiner 206 outputs, to data generator 208, information on whether transmission is possible, for example. In addition, time resource determiner 206 outputs the information on the determined time resource to transmission timing controller 207.

Transmission timing controller 207 controls the transmission timing (for example, transmission position) of the transmission signal from terminal 200. For example, transmission timing controller 207 determines the position (for example, transmission position) of one or a plurality of time resources based on the information (for example, time resource on which terminal 200 can transmit) input from time resource determiner 206, and outputs the information on the transmission position (or transmission timing) of the time resource to radio transceiver 201. In addition, for example, transmission timing controller 207 determines the timing of carrier sensing based on the control information included in the Trigger frame input from error correction decoder 205, and outputs the information on the determined timing to radio transceiver 201.

Data generator 208 generates, when determining that a response signal can be transmitted, based on whether the uplink response signal can be transmitted, which is input from time resource determiner 206, the data of the response signal based on the information such as UL Length or the frequency bandwidth included in the Trigger frame input from error correction decoder 205, and outputs the data to error correction encoder 209.

Note that the calculation of the number of symbols in the data field of each time resource and the size of the packet extension (PE) field varies depending on the setting (or configuration) of the transmission timing of the response signal and the PPDU duration.

For example, in the case of Configuration Examples 1, 2, and 3 described above, the same calculation method as defined in 11be may be used (for example, see NPL 3). In addition, for example, in the case of Configuration Examples 4, 5, and 6 described above, the number of symbols $N_{sym}$ and the size $T_{PE}$ of the PE field may be calculated based on Equations 1 and 2. In addition, for example, in the case of Configuration Example 7 described above, the number of symbols $N_{sym}$ and the size $T_{PE}$ of the PE field may be calculated based on Equations 3 and 4.

[1] (Configuration Examples 4, 5, and 6)

$$N_{sym} = \left\lfloor \left( \frac{\frac{\left(LENGTH - (N_{PPDU}-1)L_{Gap}\right)}{N_{PPDU}} + m + 3}{3} \right) \times 4 - T_{UHR-PREAMBLE} - N_{MA}N_{UHR-LTF}T_{UHR-LTF-SYM} \right\rfloor - b_{PE-Disambiguity}$$

$$\dots \text{(Equation 1)}$$

[2]

$$T_{PE} = \left\lfloor \frac{\left( \frac{(LENGTH - (N_{PPDU}-1)L_{Gap})/N_{PPDU} + m + 3}{3} \right) \times 4 - T_{UHR-PREAMBLE} - N_{MA}N_{UHR-LTF}T_{UHR-LTF-SYM}}{4} \right\rfloor \times 4$$

$$\dots \text{(Equation 2)}$$

[3] (Configuration Example 7)

$$N_{sym} = \left\lfloor \left( \frac{LENGTH - index \times \left(LENGTH - (N_{PPDU}-1)L_{Gap}\right)/N_{PPDU} + m + 3}{3} \right) \times 4 \right.$$

$$\left. - T_{UHR-PREAMBLE} - N_{MA}N_{UHR-LTF}T_{UHR-LTF-SYM} \right\rfloor - b_{PE-Disambiguity}$$

$$\dots \text{(Equation 3)}$$

[4]

$$T_{PE} =$$

$$\left\lfloor \frac{\left( \frac{LENGTH - index \times \left(LENGTH - (N_{PPDU}-1)L_{Gap}\right)/N_{PPDU} + m + 3}{3} \right) \times 4 - T_{UHR-PREAMBLE} - N_{MA}N_{UHR-LTF}T_{UHR-LTF-SYM}}{4} \right\rfloor \times 4$$

$$\dots \text{(Equation 4)}$$

In the above equations, "$N_{PPDU}$" is the number of time resources indicated by the Trigger frame, and "$L_{Gap}$" is the length of GAP corresponding to the time interval for each time resource (for example, 0 in Configuration Example 4, SIFS in Configuration Example 5, and ACK/BA duration + SIFS in Configuration Example 6). In addition, "index" is the transmission position of the time resource (for example, 0 for RB0 and 1 for RB1).

In addition, in a case where a plurality of time resources is assigned, data generator 208 may generate a data signal (for example, PHY service data unit (PSDU)) for each time resource and output the data signals to error correction encoder 209. Note that data generator 208 may generate a single data signal (for example, PHY service data unit (PSDU)) by combining a plurality of time resources.

Error correction encoder 209 performs error correction encoding on the data signal (for example, one or more PHY service data units (PSDUs)) input from data generator 208, and outputs the encoded signal to modulator 210. For example, in a case where a plurality of time resources is assigned, error correction encoder 209 may perform error correction encoding on two or more PSDUs.

Modulator 210 modulates, for example, the signal (for example, one or more PSDU signals) input from error correction encoder 209, and outputs the modulated signal to PPDU generator 212.

In addition, in a case where the modulated signal is an OFDM signal, terminal 200 may form the OFDM signal by performing IDFT processing after mapping the modulated signal to a predetermined frequency resource and adding a cyclic prefix (CP).

Preamble generator 211 generates a Preamble to be added to the data addressed to AP 100, based on the control information on uplink transmission input from error correction decoder 205, for example. The preamble includes, for example, information used by AP 100 to receive and decode the data. Preamble generator 211 outputs the generated Preamble signal to PPDU generator 212. In addition, Preamble generator 211 may generate a mid-amble (for example, control signal inserted in the middle of a data frame) as necessary, and output the mid-amble to PPDU generator 212. The format of the Preamble or the mid-amble may be changed according to the position of the time resource. Note that examples of the formats of the preamble and the mid-amble will be described later.

PPDU generator 212 generates a single PPDU obtained by time-multiplexing the Preamble signal or the mid-amble signal from Preamble generator 211 and the modulated signal (for example, OFDM signal) from modulator 210 (for example, the preamble signal and the OFDM signal are time-multiplexed in this order). For example, when a plurality of modulated signals (for example, PSDUs) is input from modulator 210, PPDU generator 212 generates a plurality of PPDUs. PPDU generator 212 outputs the generated PPDU to radio transceiver 201.

The configuration examples of AP 100 and terminal 200 have been described above.

[Method for Signaling Time Resource Information]

Next, exemplary methods for signaling time resource information from AP 100 to terminal 200 will be described.

AP 100 generates control information in at least one of terminal-common information generator 103 and/or terminal-specific information generator 104 in accordance with the indication of time resource controller 101. The control information (hereinafter, referred to as time resource information) is for indicating, using one Trigger frame, to terminal 200, transmission of a plurality of response signals (for example, a plurality of time resources) having different timings.

In the following, a method for generating (or method for indicating) the time resource information will be described. Hereinafter, as an example, a method for indicating the time resource information by the Trigger frame will be described.

[Signaling Method 1]

In Signaling Method 1, for example, the number of time resources (also referred to as the number of transmissions or the number of divisions) of a plurality of uplink response signals is indicated to terminal 200 in the Trigger frame. For example, the time resource information includes information on the number of the plurality of time resources (for example, RBs). In addition, in Signaling Method 1, for example, the transmission timing (also referred to as transmission position) of each time resource is not explicitly indicated.

The number of time resources may be indicated using any of the following formats, for example.

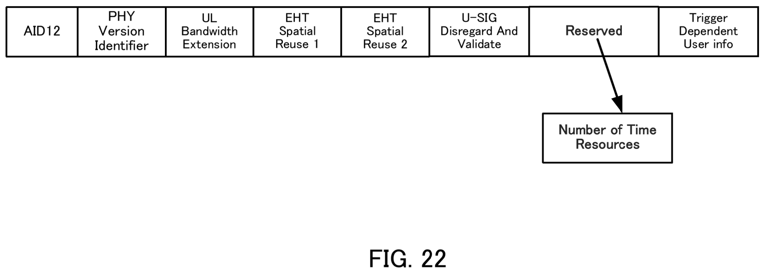

(1) As illustrated in FIG. 22, AP 100 uses a Reserved subfield (3 bits) in the Special User Info field to indicate information on the number of time resources (referred to as "Number of Time Resources"). The Number of Time Resources may be, for example, a 3-bit subfield, and the number of time resources varies depending on a set value of the subfield. For example, "000" may indicate that the number of time resources is 1, "001" may indicate that the number of time resources is 2, and "010" may indicate that the number of time resources is 3. Note that the size of the Number of Time Resources subfield is not limited to 3 bits, and the Number of Time Resources may be indicated by using a part (for example, 2 bits) of the Reserved subfield. By using the Reserved subfield for the indication of the time resource information as described above, signaling overhead can be reduced.

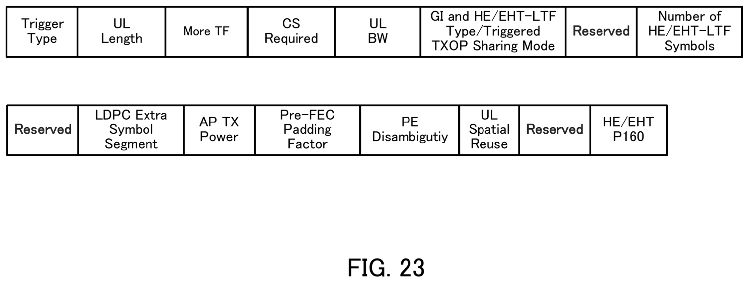

(2) As illustrated in FIG. 23, AP 100 uses any one or a plurality of Reserved subfields (1 bit) in the Common Info field to indicate information on the number of time resources (for example, referred to as "Number of Time Resources"). By using the Reserved subfield for the indication of the time resource information as described above, signaling overhead can be reduced.

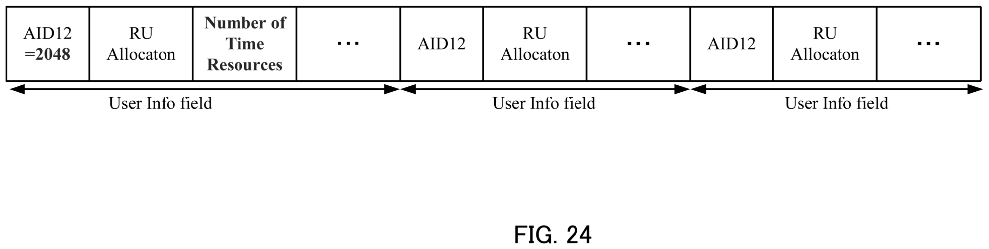

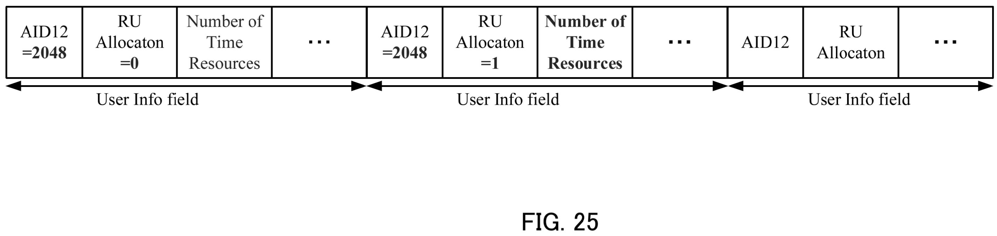

(3) As illustrated in FIG. 24, AP 100 indicates, in the User Info List of the Trigger frame, the number of time resources (for example, Number of Time Resources) of a plurality of uplink response signals in the User Info field to which a specific AID12 is configured. For example, at least one of 2008 to 2044 and 2047 to 4094, which are AID12 that are not used in the standards up to 11be, may be configured as the value of the specific AID12 (in the example of FIG. 24, 2048). In addition, a plurality of User Info fields with specific AID12 may be present. For example, as illustrated in FIG. 25, specific AID12 (for example, 2048) may be configured in each of the plurality of User Info fields with different RU allocations, and the notification indicating different numbers of time resources per RU may be made.

In Signaling Method 1, a method for specifying terminal 200 (STA) that can use each time resource and a method for indicating the transmission parameter (for example, information such as MCS or Received Power indicated in the User Info field) may be, for example, any of the following methods.

<Designation/Indication Method 1>

In Designation/Indication Method 1, AP 100 does not indicate terminals 200 that can use each time resource and the transmission parameter for each time resource. For example, the terminal (for example, AID12) that uses each of the plurality of time resources and the transmission parameter for each of the plurality of time resources in a certain RU may be common.

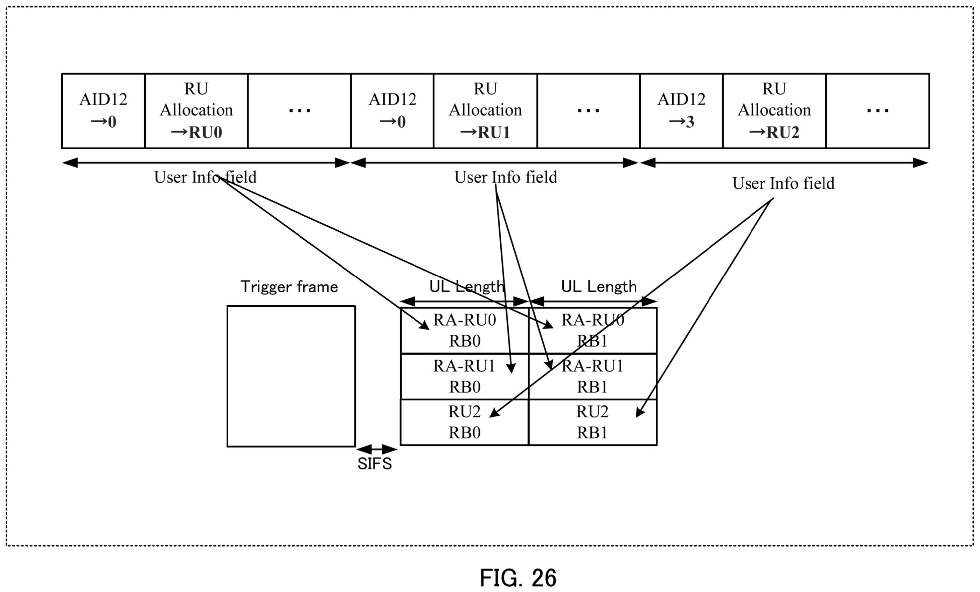

FIG. 26 illustrates an example of a method for specifying terminal 200 and a method for indicating the transmission parameter according to Designation/Indication method 1.

In the example of FIG. 26, the User Info List field of the Trigger frame includes three User Info subfields. In addition, in the example of FIG. 26, the set values of the AID12 of the User Info subfields are 0, 0, and 3, respectively, the set values of the RU Allocation subfields are values indicating RU0, RU1, and RU2, respectively, and the number of 2 (for example, RB0 and RB1) is configured as the number of time resources. Here, the RU for which AID12 is set to 0 is a random access RU (for example, RA-RU), and the RU for which AID12 is set to 3 is the RU assigned to terminal 200 for which AID12 = 3 is configured.

In Designation/Indication Method 1, no User Info field individual for each of the plurality of (2 in the example of FIG. 26) time resources is present, and terminal 200 and the transmission parameter indicated by the User Info field common to the plurality of time resources (RB0 and RB1 in the example of FIG. 26) in each RU are configured. For example, in FIG. 26, terminal 200 that is to perform random access is specified by the User Info subfield in which AID12 = 0 and RU0 is configured in the RU Allocation subfield, and the transmission parameter common to both RB0 and RB1 in RU0 is indicated. Similarly, for example, in FIG. 26, terminal 200 with AID12 = 3 is specified by the User Info subfield in which AID12 = 3 and RU2 is configured in the RU Allocation subfield, and the transmission parameter common to both RB0 and RB1 in RU2 is indicated. The same applies to another User Info subfield.

As described above, by configuring terminal 200 and the transmission parameter indicated by the User Info field common to time resources, signaling overhead can be reduced.

<Designation/Indication Method 2>

In Designation/Indication Method 2, AP 100 indicates, for each time resource, terminal 200 that can use each time resource and the transmission parameter. For example, the terminal (for example, AID12) that uses each of the plurality of time resources and the transmission parameter for each of the plurality of time resources in a certain RU are individually configured.

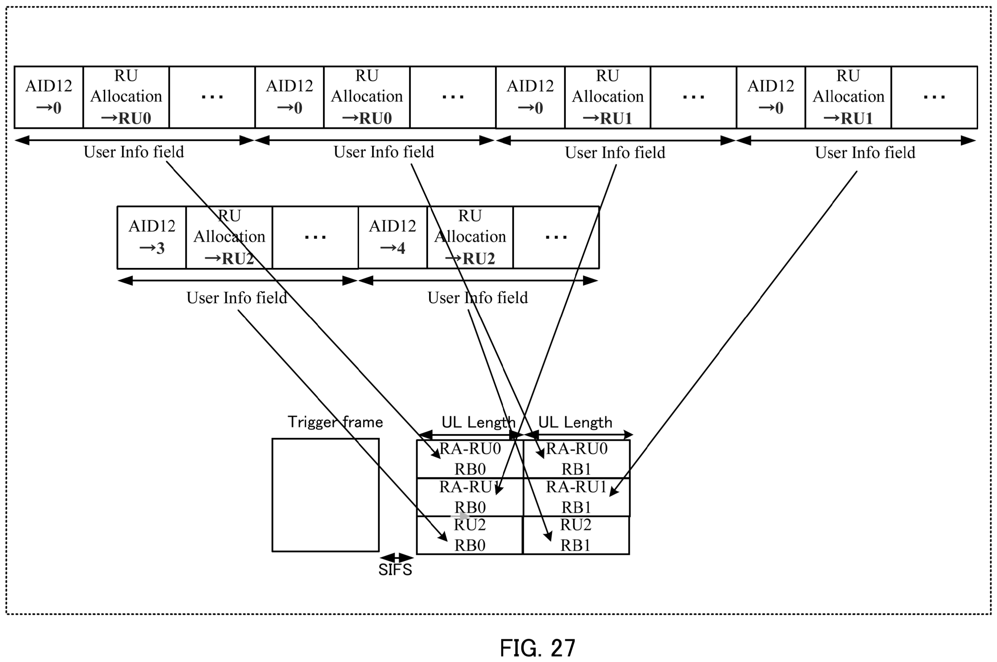

FIG. 27 illustrates an example of a method for specifying terminal 200 and a method for indicating the transmission parameter according to Designation/Indication Method 2.

In the example of FIG. 27, the User Info List field of the Trigger frame includes six User Info subfields. In addition, in the example of FIG. 27, the set values of the AID12 of the User Info subfields are 0, 0, 0, 0, 3, and 4, respectively, the set values of the RU Allocation subfield are values indicating RU0, RU0, RU1, RU1, RU2, and RU2, respectively, and the number of 2 (for example, RB0 and RB1) are configured as the number of time resources. Here, the RU for which AID12 is set to 0 is a random access RU (for example, RA-RU), and the RU for which AID12 is set to 3 or 4 is the RU assigned to terminal 200 for which AID12 = 3 or 4 is configured.

In Designation/Indication Method 2, as a relationship between the plurality of User Info fields and the plurality of time resources, for example, the positions of the plurality of time resources may be determined from the arrangement order of the plurality of User Info fields in which the same value (for example, the same RU) is configured in the RU Allocation field. For example, as illustrated in FIG. 27, when two User Info fields in which RU0 is configured are present, a User Info field having an earlier arrangement order between the two User Info fields in which RU0 is configured may be configured as the User Info field for which RB0 is specified, and a User Info field having a later arrangement order may be configured as the User Info field for which RB1 is specified. The same applies to another RU.

Note that in a case where MU-MIMO is applied, terminal 200 may determine the time resource positions based on an SS Allocation subfield in addition to the RU Allocation field.

In addition, in the example of FIG. 27, the example has been described in which the User Info fields are arranged so that a plurality of User Info fields in which the same value (for example, the same RU) is configured in the RU Allocation field are arranged consecutively (for example, in the order of RU0 (RB0), RU0 (RB1), RU1 (RB0), RU1 (RB1), RU2 (RB0), and RU2 (RB1)), but the arrangement of the User Info fields are not limited thereto.

For example, the User Info fields related to the same RB may be arranged consecutively. For example, the User Info fields may be arranged in the order of RU0 (RB0), RU1 (RB0), RU2 (RB0), RU0 (RB1), RU1 (RB1), and RU2 (RB1).

In addition, between the User Info field related to RB0 (for example, the last User Info field related to RB0, that is, the User Info field corresponding to RU2(RB0)) and the User Info field related to RB1 (for example, the first User Info field related to RB1, that is, the User Info field corresponding to RU0(RB1)), a Special User Info field (may be the same as the field described in the format example (1) for the number of time resources (for example, see FIG. 22)) or a User Info field in which AID12 is set to a specific value (may be the same as the field described in the format example (3) for the number of time resources (for example, see FIG. 24)) may be inserted. The inserted (Special) User Info field may include information for indicating that RB scheduling is performed (for example, RB enabled subfield, information indicating the number of RBS (Number of Time Resources subfield), and standard version information (for example, information indicating that the User Info field is for UHR)). This allows legacy terminals to recognize the User Info field related to RB0 and not recognize (discards) the inserted (Special) User Info field and the subsequent User Info fields (for example, allocation information related to RB1 and/or RB2 and later RBs), thereby preventing legacy terminals from erroneously interpreting the subsequent User Info fields (for example, erroneously recognizing the fields as the scheduling information for RB0) and malfunctioning.

In addition, the value of the AID12 of the User Info field including the allocation information for RB1 or later may be set (for example, limited) to the value of the AID assigned to the terminal (for example, UHR terminal) that supports the multiple time resource allocation function. For example, the AID12 of the User Info field including the allocation information for RA-RUO RB1 may be set to the AID (for example, 3) for UHR terminals. For example, a value of the AID12 indicating the RA-RU limited to the terminal (for example, UHR terminal) that supports multiple time resource allocation function may be defined (for example, 2049), and the defined value of the AID12 may be used when RA-RU is assigned to RB1 or later.

As described above, by configuring, for each time resource, terminal 200 and the transmission parameter specified by the User Info field, the resource allocation for terminal 200 and the transmission parameter (for example, MCS) can be flexibly configured.

Designation/Indication Methods 1 and 2 have been described above.

In Designation/Indication Methods 1 and 2, the example based on Configuration Example 1 has been described, but Designation/Indication Methods 1 and 2 may be applied to another configuration example (for example, any of Configuration Examples 2 to 7). For example, in Configuration Example 2, a predetermined time interval (SIFS or the like) is provided between the time resources.

Furthermore, in FIGS. 26 and 27, RA-RU0 or RA-RU1 is illustrated as a single RU, but the present disclosure is not limited thereto, and the RA-RU may be divided into a plurality of RUs depending on the value of an RA-RU Information subfield of the User Info field.

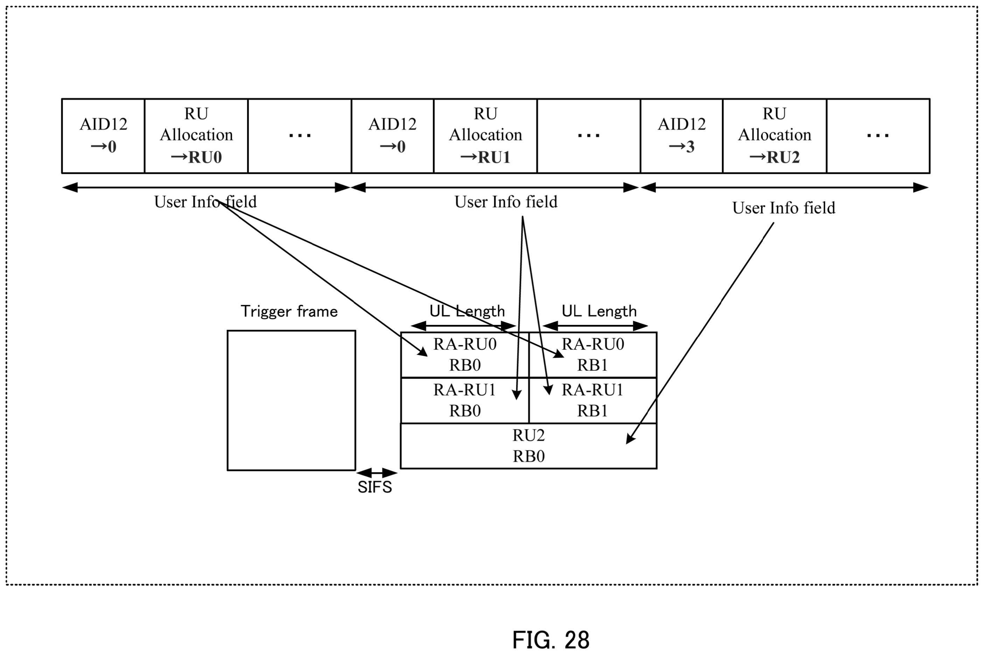

In addition, the indication of the number of time resources may be performed for (for example, limited to) the RU for random access and need not be performed for another RU. Whether the indication is limited to random access may be defined in the specification, or whether the indication is limited to random access may be indicated to terminal 200 by another control information or a Trigger frame. For example, as illustrated in FIG. 28, when it is indicated that the number of time resources (for example, Number of Time Resources) is 2, in Designation/Indication Method 1 described above, the number of time resources may be set to 2 for the RA-RU (for example, RA-RUO and RA-RU1), and the number of time resources may be set to one for the resource (for example, RU2) for which a certain terminal is specified.

[Signaling Method 2]

In Signaling Method 2, for example, the number of time resources (or the number of transmissions or the number of divisions) of the plurality of uplink response signals is indicated to terminal 200 in the Trigger frame, and the transmission timing (or also referred to as transmission position) of each time resource is explicitly indicated to terminal 200. For example, the time resource information includes information on the number of the plurality of time resources (for example, RBs) and information on the positions of the plurality of time resources.

Note that the method for indicating the number of time resources in Signaling Method 2 may be the same as that in Signaling Method 1. Alternatively, the information on the transmission position (index of resource) of each time resource may be indicated, and the explicit indication of the number of time resources may be omitted. Hereinafter, a method for indicating the information on the transmission position (index of resource) of each time resource in Signaling Method 2 will be described.

<Position Indication Method 1>

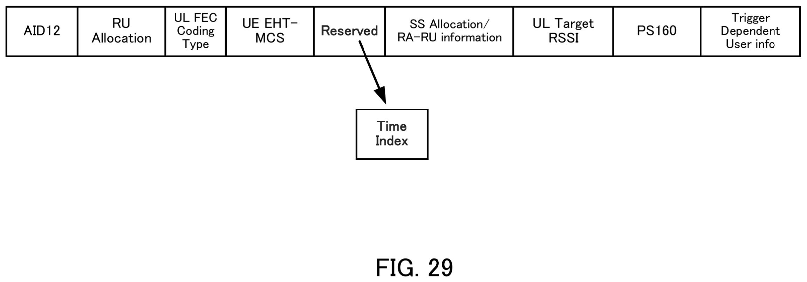

As illustrated in FIG. 29, the transmission position (for example, Time Index) of each time resource is indicated by a Reserved subfield of the User Info field.

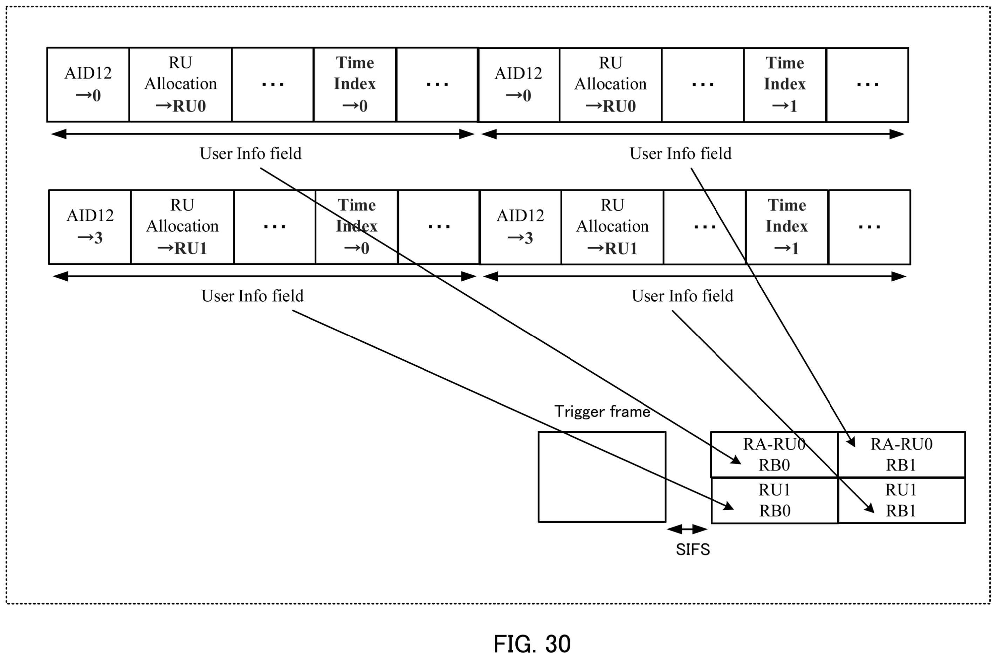

FIG. 30 illustrates an example of indicating the transmission position of a time resource in Position Indication Method 1. In FIG. 30, the number of time resources is set to 2 (for example, RB0 and RB1). As illustrated in FIG. 30, the index of each time resource is indicated in the Time index subfield of the User Info field. For example, Time index = 0 indicates RB0, and Time index = 1 indicates RB1.

As described above, by using the Reserved subfield for the indication of the transmission position of the time resource, signaling overhead can be reduced.

<Position Indication Method 2>

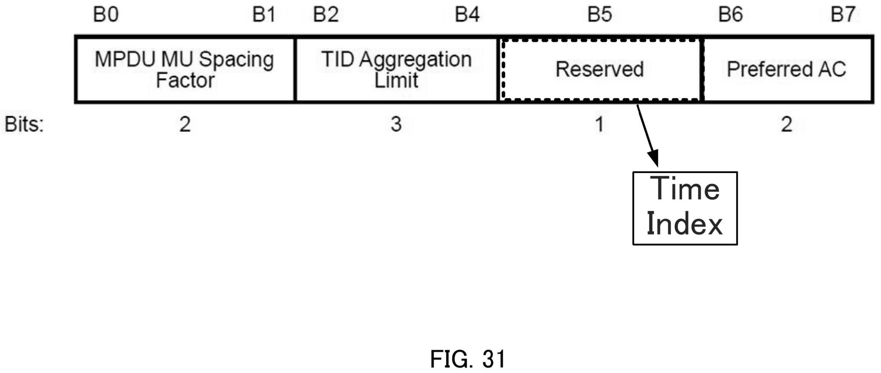

As illustrated in FIG. 31, in a case where the Trigger Type of the Common Info field is Basic, the transmission position (for example, Time Index) of each time resource is indicated by the Reserved subfield of the Trigger Dependent User Info subfield of the User Info field.
For example, the method for setting the value of the Time Index may be the same as the Position Indication Method 1.
As described above, using the Reserved subfield for the indication of the transmission position of the time resource, signaling overhead can be reduced.

<Position Indication Method 3>

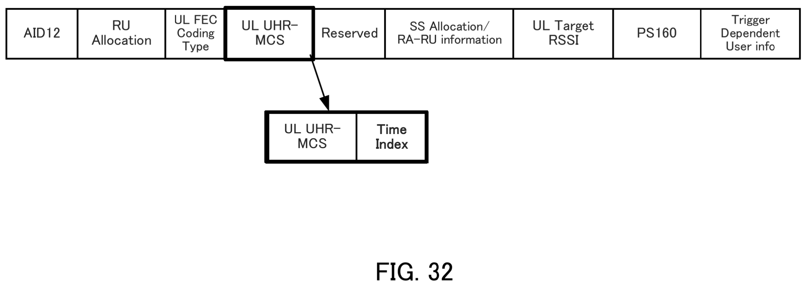

As illustrated in FIG. 32, the transmission position (for example, Time Index) of each time resource is indicated by a part of the UL UHR-MCS subfield of the User Info field.
In 11be, the UL UHR-MCS subfield is a 4-bit field. For example, among the 4 bits, 2 bits are used for the UL UHR-MCS subfield (for example, field for indicating MCS), and 2 bits are used for the Time Index subfield (for example, field for indicating the transmission position of the time resource). In the 2-bit UL UHR-MCS subfield, a low value (for example, MCS = 0 to 3) of MCS may be indicated, or every other MCS (for example, MCS = 0, 2, 4, 6) may be indicated.
For example, in a case where the multiple time resource allocation is intended for LL Traffic, LL Traffic has a high requirement for error-free transmission, and thus a low MCS is likely to be used and a high MCS is likely to not be used. Accordingly, even when a low MCS is configured (or high MCS is not configured) as described above, the impact on the system throughput is small.
As described above, using a part of the UL UHR-MCS subfield for the indication of the transmission position of the time resource, signaling overhead can be reduced.
The number of bits of the UL UHR-MCS subfield configured as the Time Index subfield is not limited to 2 bits, and may be another number of bits.

<Position Indication Method 4>

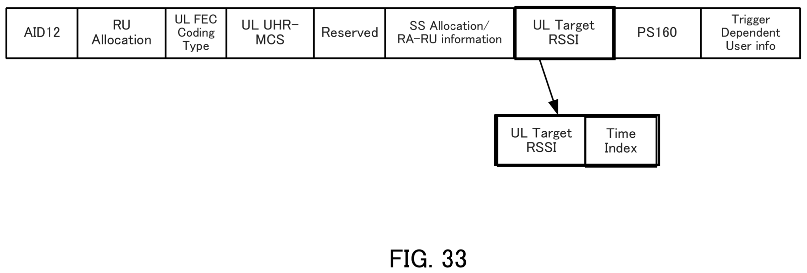

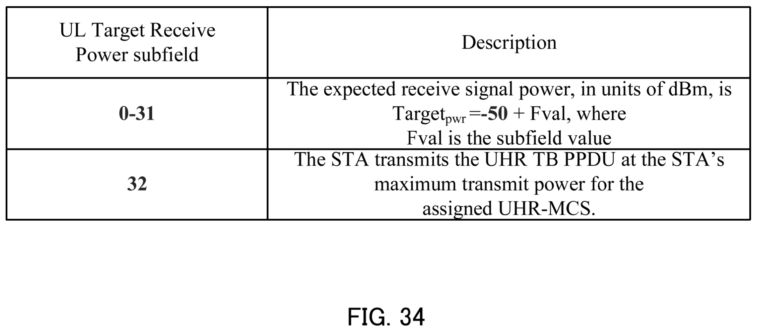

As illustrated in FIG. 33, the transmission position (for example, Time index) of each time resource is indicated by a part of the UL Target Received Signal Strength Indicator (RSSI) subfield of the User Info field.
In 11be, the UL Target RSSI subfield is a 7-bit field. For example, 5 bits may be used for the UL Target RSSI subfield (for example, field for indicating RSSI), and 2 bits may be used for the Time Index subfield (for example, field for indicating the transmission position of the time resource). For example, in the 5-bit UL Target RSSI subfield, as illustrated in FIG. 34, a high RSSI may be indicated. For example, in the standards up to 11be, the RSSI can be set to -100 + Fval, whereas in FIG. 34, the RSSI can be set to -50 + Fval. Setting Fval to 0 to 31 (value of the 5-bit UL Target RSSI subfield) allows for configuring a high RSSI and not configuring a low RSSI. In addition, in the 5-bit UL Target RSSI subfield, for example, values configurable in the case of 7 bits may be configured non-consecutively (at intervals).
For example, as in NPL 2, in a case where the multiple time resource allocation is intended for LL Traffic, LL Traffic has a high requirement for error-free transmission, and thus a high RSSI is likely to be used and a low RSSI is likely to not be used. Accordingly, even when a high RSSI is configured (or low RSSI is not configured) as described above, the impact on the system throughput is small.
As described above, using a part of the UL Target RSSI subfield for the indication of the transmission position of the time resource, signaling overhead can be reduced.
Note that the number of bits of the UL Target RSSI subfield configured as the Time Index subfield is not limited to 2 bits, and may be another number of bits.
Position Indication Methods 1 to 4 have been described above.
Note that, similarly to Signaling Method 1, the User Info fields indicating the same RU allocation may be consecutively arranged (for example, FIG. 30), or the User Info fields indicating the same RB allocation may be consecutively arranged (not illustrated). In addition, a Special User Info field or a User Info field having a specific value of AID12 may be inserted between the User Info field indicating the allocation of RB0 and the User Info field indicating the allocation of RB1.
In addition, the AID12 field (value of AID12) of the User Info field indicating the allocation of RB1 or later RB (for example, Time Index is 1 or more) may be set (for example, limited) to the value of the AID assigned to the terminal (for example, UHR terminal) that supports the multiple time resource allocation function. The value of the AID12 indicating the RA-RU limited to the terminal (for example, UHR terminal) that supports the multiple time resource allocation function may be defined (for example, 2049), and the defined value of the AID12 may be used when RA-RU is assigned to RB1 or later.

By explicitly indicating the time resource position as in Position Indication Methods 1 to 4, terminal 200 can determine the time resource position without checking a subfield in another User Info field different from the AID12 subfield, thereby reducing the processing amount of terminal 200.

In addition, in Signaling Method 2, terminal 200 can determine the number of time resources from the indicated Time Index value. For example, in a case where it is indicated that Time Index = 0, 1, terminal 200 can determine that the number of time resources is 2. Thus, in Signaling Indication Method 2, the number of time resources need not be explicitly indicated.

[Signaling method 3]

In Signaling Method 3, in the Trigger frame, the number of time resources (or the number of transmissions or the number of divisions) of the plurality of uplink response signals is indicated, and information on the resource start position and the resource duration for each of the plurality of time resources with different timings is indicated to terminal 200.

In Signaling Method 3, the number of time resources and the start position and resource duration of each time resource may be indicated to terminal 200 by, for example, the following format.

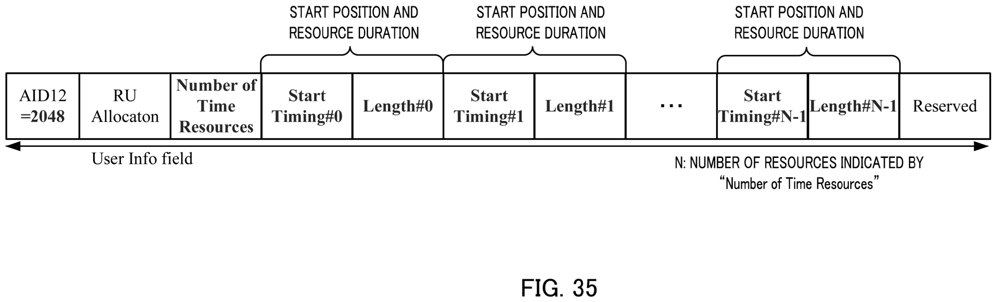

For example, as illustrated in FIG. 35, in the User Info field in which a specific AID (for example, AID12 = 2048) is configured, the number of time resources (for example, Number of Time Resources), the start position (for example, Start Timing) of each time resource, and the resource duration (for example, Length) of each time resource are indicated. The specific AID may be, for example, any of the AID12 (2008 to 2044 and 2047 to 4094) that are not used in the standards up to 11be.

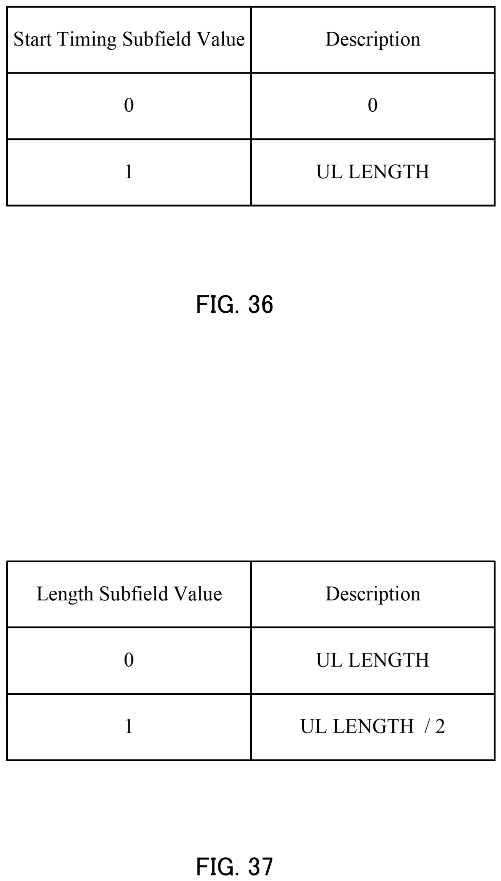

For example, the Start Timing subfields and the Length subfields are present corresponding to the number of time resources. FIG. 36 illustrates a configuration example of the start position (Start Timing) of the resource, and FIG. 37 illustrates a configuration example of the resource duration (Length). As illustrated in FIGS. 36 and 37, for the resource start position and the resource duration, a value based on UL Length indicated in the Common Info field may be specified. Note that the present disclosure is not limited to a case where a value based on UL Length is configured for the resource start position and the resource duration, and another value may be configured.

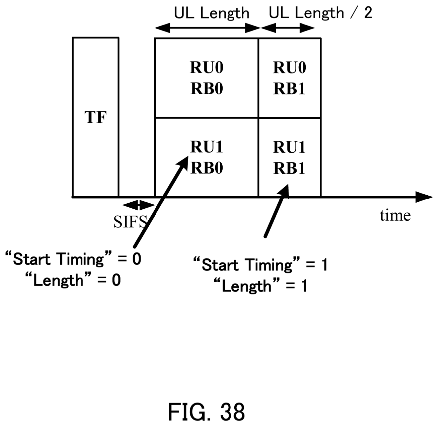

FIG. 38 illustrates an example of a relationship between the configuration of the resource start position and resource duration and each time resource (RB). In FIG. 38, Start Timing = 0 is configured for the time resource of RB0, and thus the start position of the resource is configured after SIFS from the resource of the Trigger frame in accordance with FIG. 36. In addition, Length = 0 is configured for the time resource of RB0, and thus the resource duration is configured to be UL LENGTH in accordance with FIG. 37. In addition, in FIG. 38, Start Timing = 1 is configured for the time resource of RB1, and thus the start position of the resource is configured after SIFS + UL LENGTH from the resource of the Trigger frame in accordance with FIG. 36. In addition, Length = 1 is configured for the time resource of RB1, the resource duration is configured to be UL LENGTH/2 in accordance with FIG. 37.

Note that FIG. 38 illustrates an example in which Configuration Example 1 is applied, but the present disclosure is not limited thereto, and any of Configuration Examples 2 to 7 may be applied. For example, Signaling Method 3 can be also applied to a case where a predetermined time interval is configured between the time resources as in Configuration Example 2. The Start Timing of RB1 in this case may be configured to be UL LENGTH + SIFS or may be simply configured to be UL LENGTH. In the case where the Start Timing is simply configured to be UL LENGTH, a predetermined value (SIFS or the like) may be added to the specified UL LENGTH according to the configurations of the transmission timing and the PPDU duration, and then the resource start timing may be determined.

In addition, the Trigger frame may include a plurality of User Info fields with specific AID12. For example, a field in which the specific AID12 is configured may be present for each User Info field in which different RU allocations are configured, and the notification indicating different numbers of time resources per RU may be made.

As described above, according to Signaling Method 3, by explicitly indicating the start position of the time resource and the resource duration, terminal 200 can determine the time resource position without checking a subfield of another User Info field different from the AID12 subfield, thereby reducing the processing amount of terminal 200. In addition, indicating the start position of the resource and the resource duration enables flexible positioning of the time resource.

[Signaling method 4]

In Signaling Method 4, one or some of the plurality of time resources with different timings indicated in the Trigger frame is configured as resources (for example, dedicated resources) used by terminal 200 satisfying a predetermined condition.

Note that, in Signaling Method 4, the method for signaling the number of time resources may be the same as any of Signaling Methods 1 to 3.

Here, the "condition" of the terminal that uses the dedicated resource may be, for example, at least one of the following conditions 1 to 4. Which condition to be applied may be defined in the specification, or may be indicated to terminal 200 by another control information or the Trigger frame. In addition, for example, the dedicated resource used by terminal 200 satisfying the predetermined condition is indicated by any of the dedicated resource indication methods 1 to 4 described later.

<Condition 1>

The predetermined condition is that terminal 200 holds traffic (for example, LL traffic) for which low latency is required.

Note that the traffic for which low latency is required may be data requiring urgency, such as a service for emergencies. The service for emergencies may be, for example, EPCS priority access or an emergency service in interworking with a public network.

For example, the traffic for which low latency is required may be determined by the identifier of LL traffic. The identifier of LL traffic may be defined in the specification, or may be negotiated or announced in advance. The identifier of LL traffic may be indicated by a Management frame or the like, for example. In the Management frame, for example, the identifier of LL traffic may be indicated using Traffic Specification (TSPEC). The identifier of LL traffic may be, for example, a predetermined TID or AC value (for example, TID value of 4 or more). In addition, for example, an LL traffic ID or a sub-TID may be defined.

In addition, the traffic for which low latency is required may be determined based on a remaining time until transmission data (for example, MAC Service Data Data unit (MSDU)) is discarded (for example, also referred to as Expire) or a time at which the transmission data is discarded. For example, the transmission data traffic for which the remaining time until the discard is 100 ms or less may be treated as the traffic for which low latency is required. In addition, a threshold value of the remaining time determined as the traffic for which low latency is required may be negotiated/announced.

As described above, by configuring (for example, limiting) one or some of the RA-RU resources as the resources for terminal 200 that holds the traffic for which low latency is required, the traffic for which low latency is required can be transmitted early.

<Condition 2>

The predetermined condition is that terminal 200 supports UHR.

The function of transmitting response signals on the time resources with a plurality of different timings by one Trigger frame may be held by terminal 200 that supports UHR and later standards, and need not be held by terminal 200 that does not support UHR and later standards. Then, by configuring one or some of the RA-RU resources (for example, time resources other than the first resource) as the dedicated resources for the terminal that supports UHR and later standards, it is possible for terminal 200 that supports the function of transmitting response signals using a plurality of resources and terminal 200 that does not support the function of transmitting response signals using a plurality of resources to coexist.

<Condition 3>

The predetermined condition is that terminal 200 can transmit response signals using time resources with a plurality of different timings.

This makes it possible, as in Condition 2, for terminal 200 that supports the function of transmitting response signals using a plurality of time resources and terminal 200 that does not support the function of transmitting response signals using a plurality of time resources to coexist.

Note that terminal 200 may indicate, to AP 100, in advance whether terminal 200 can transmit response signals using time resources with a plurality of different timings (for example, holds capability of multiple transmission). By configuring one or some of the RA-RU resources (for example, time resources other than the first resource) as the dedicated resources for terminal 200 that can transmit response signals using time resources with a plurality of different timings, it is possible for terminal 200 that supports the function of transmitting response signals using a plurality of resources and terminal 200 that does not support the function of transmitting response signals using a plurality of resources to coexist.

<Condition 4>

The predetermined condition is that permission to use resources has been granted in advance to terminal 200 by the control information or the like.

Note that the permission is not limited to the permission individual to terminal 200, and may be granted per group that groups terminals 200.

The terminal to which the permission is granted may be, for example, a terminal included in the membership of Restricted Target Wake Time (R-TWT). For example, by limiting the use of the resources to some of the terminals, it is possible, as in Condition 1, to transmit high-priority traffic early by configuring dedicated resources for terminal 200 that holds the traffic for which low latency is required or terminal 200 having another traffic having a high importance.

The conditions of the terminal that uses the dedicated resource have been described above.

Next, a method for indicating the dedicated resource will be described.

<Dedicated Resource Indication Method 1>

For example, the dedicated resource is indicated by the User Info field in which the AID12 is a specific value among the User Info fields included in the Trigger frame. For example, the RA-RU indicated by the User Info field in which the specific AID12 (for example, 2049) is configured is configured as the dedicated resource. The specific AID12 is not limited to 2049, and may be, for example, any of 2008 to 2044 and 2047 to 4094, which are AID12 that are not used in the standards up to 11be.

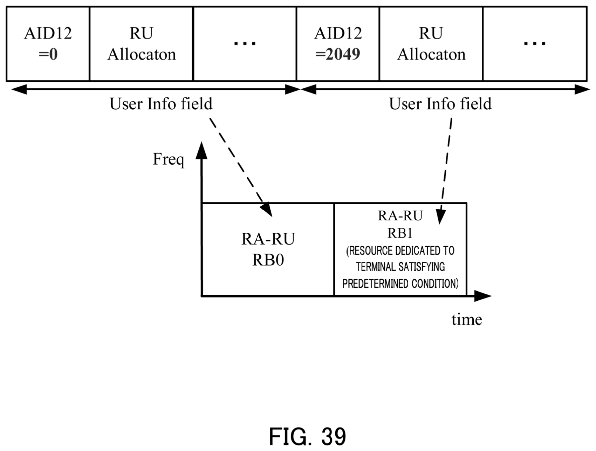

FIG. 39 illustrates a configuration example of the dedicated resource in Dedicated Resource Indication Method 1. In FIG. 39, the time resource indicated in the first User Info field is configured as the RA-RU common to all the terminals 200 by configuring AID12 = 0. In addition, in FIG. 39, the time resource indicated in the second User Info field is configured as the dedicated resource for terminal 200 satisfying a predetermined condition (for example, at least one of the above-described conditions 1 to 4) by configuring AID12 = 2049.

Note that the relationship between each User Info field and each time resource may be indicated by, for example, the Time index of the User Info field described in Signaling Method 2.

<Dedicated Resource Indication Method 2>

For example, the dedicated resource is determined based on the order in which a plurality of time resources is indicated in the Trigger frame. For example, AP 100 may implicitly indicate whether the resource is the dedicated resource by the arrangement order of the plurality of time resources indicated by the Trigger frame.

Examples of the indication method include the following.

(1) Among the plurality of time resources, a time resource different from the first resource is configured as the dedicated resource. For example, in a case where three time resources of RB0, RB1, and RB2 are indicated as the time resources, the time resources of RB1 and RB2 other than the first resource of RB0 are configured as the dedicated resources.

(2) Among the plurality of time resources, the last time resource is configured as the dedicated resource. For example, in a case where three time resources of RB0, RB1, and RB2 are indicated as the time resources, the time resource of the last RB2 is configured as the dedicated resource.

(3) Among the plurality of time resources, an even-numbered (or odd-numbered) time resource is configured as the dedicated resource. For example, in a case where three time resources of RB0, RB1, and RB2 are indicated as the time resources, the even-numbered time resources of RB0 and RB2 are configured as the dedicated resources.

<Dedicated Resource Indication Method 3>

For example, whether the resource is the dedicated resource is indicated by the Reserved subfield of the User Info field.

For example, in the time resource indicated by the User Info field, the time resource for which the value of the Reserved subfield is 1 is configured as the dedicated resource, and the time resource for which the value of the Reserved subfield is 0 is not configured as the dedicated resource.

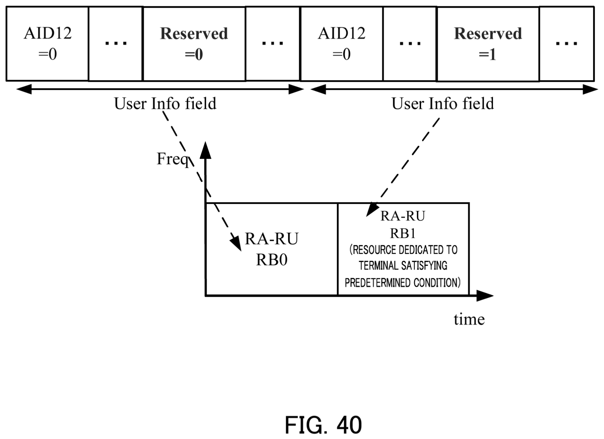

FIG. 40 illustrates an example of Dedicated Resource Indication Method 3. In FIG. 40, the time resource indicated in the first User Info field is configured with Reserved = 0 and thus is configured as the RA-RU common to all the terminals 200. In addition, in FIG. 40, the time resource indicated in the second User Info field is configured with Reserved = 1 and thus is configured as the dedicated resource for terminal 200 satisfying the condition.

<Dedicated Resource Indication Method 4>

For example, the dedicated resource is indicated by the information in a bitmap format for the plurality of time resources, in the User Info field in which the AID12 is a specific value. For example, in the Trigger frame, AP 100 indicates, in the User Info field in which the specific AID12 (for example, 2050) is configured, whether the time resource indicated by each User Info field is a dedicated resource, in a bitmap format (for example, referred to as Specific Resources Bitmap subfield).

Note that the value of the specific AID12 is not limited to 2050, and may be, for example, any of 2008 to 2044 and 2047 to 4094, which are AID12 that are not used in the standards up to 11be.

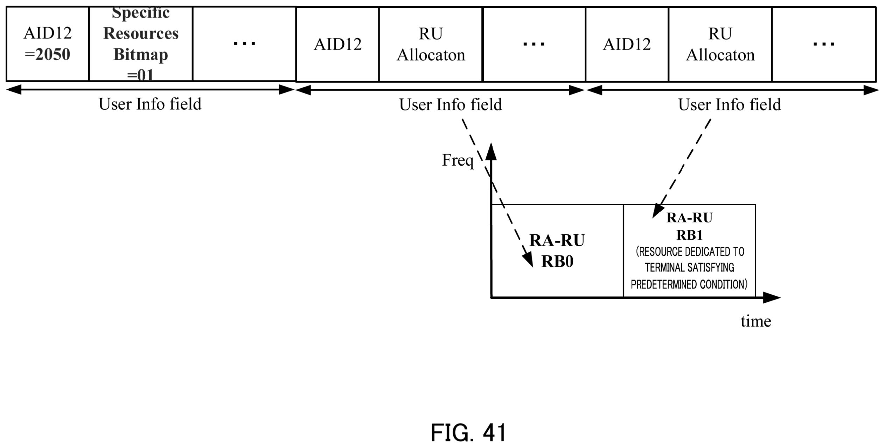

FIG. 41 illustrates an example of Dedicated Resource Indication Method 4. In FIG. 41, the size of the Specific Resources Bitmap subfield corresponds to the number of the plurality of time resources indicated by the Trigger frame (in the example of FIG. 41, the number of time resources is 2, and the size is 2 bits). Each bit of the Specific Resource Bitmap subfield is associated with a corresponding time resource (for example, RB0 and RB1), and indicates whether each time resource is the dedicated resource. In the example of FIG. 41, for the first time-resource, the value of the bit of the Specific Resource Bitmap subfield is 0, and thus the first time-resource is a resource shared by all the terminals 200. Furthermore, in the example of FIG. 41, for the second time resource, the value of the bit of the Specific Resource Bitmap subfield is 1, and thus the second time resource is the dedicated resource for the terminal satisfying the predetermined condition.

The methods for indicating the dedicated resource have been described above.

Note that, in a case where RA-RUs with a plurality of different timings are indicated by one Trigger frame, an AID12 value that is not used in the standards up to 11be (for example, any of 2008 to 2044 and 2047 to 4094) may be configured in the AID12 for RA. For example, AID12 = 2047 may be used for an associated terminal, and AID12 = 2048 may be used for an unassociated terminal.

A terminal that supports only 11be and earlier standards does not support the transmission using a plurality of time resources. Thus, when a plurality of time resources is indicated by one Trigger frame, the terminal possibly recognizes the plurality of time resources as a single resource and transmit the response signal. In this case, the response signal transmitted by the terminal possibly collides with the signal transmitted by another terminal. Therefore, by using the AID 12 value that is not used in 11be and earlier standards for indicating the RA-RUs with a plurality of different timings, it is possible to prevent the terminal supporting the standards up to 11be from erroneously performing RA transmission in the indication of the plurality of time resources. In addition, as described in Signaling Method 2, in the case where a value of one or more is specified in the Time Index, the AID12 value that is not used in the standards up to 11be may be used for the AID12 for RA, and in the case where the Time Index is not specified (for example, in a case where the resource with the Time Index of 0 is indicated), the AID12 value that is used in the standards up to 11be (for example, AID12 = 0 or 2045) may be used. By varying the set value of the AID12 for indicating RA-RU between the terminal that supports the standards up to 11be and the terminal that supports the UHR standard, it is possible to avoid collision due to misrecognition of the position of the time resource.

In addition, for example, in a case where the AID12 value that is 2048 or more (for example, the most significant bit of AID12 is 1) is used in the User Info field, the User Info field in which the AID12 value is 2048 or more may be positioned behind the User Info field in which the AID12 is 2047 or less, in the User Info List. In 11be or earlier standards, an AID12 whose most significant bit is 1 is only used for 4095. The User Info field with AID12 equal to 4095 is used to indicate that the region of the User Info List following that User Info field is padding bits. Terminal 200 does not perform decoding processing on User Info fields following that User Info field with AID12 equal to 4095, for example. In this way, the terminal that supports only the standards up to 11be possibly determines whether fields after the User Info field with that AID12 is padding bits, based on the most significant bit of the AID12. Then, for example, by positioning the User Info field with AID12 equal to 2048 or more behind the User Info field with AID12 equal to 2047 or less, it is possible to prevent the terminal that supports only the standards up to 11be from stopping the processing of decoding the Trigger frame in the middle.

[Format Examples of Preamble and Mid-Amble]

Next, format examples of the Preamble and the mid-amble generated in Preamble generator 211 and PPDU generator 212 in terminal 200 in response to the instruction from time resource determiner 206 will be described. Note that the Preamble is a signal (for example, L-STF to UHR-LTF) transmitted before the Data field.

<Format Example 1>

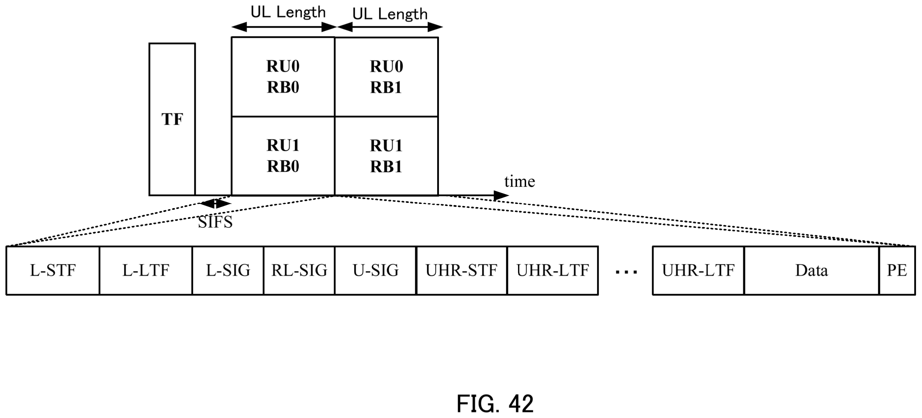

In Format Example 1, as illustrated in FIG. 42, the Preamble format of the response signal transmitted on each of the plurality of time resources indicated by the Trigger frame is the same (common).

In addition, even when a mid-amble is present, the format of the mid-amble of the response signal transmitted on each time resource indicated by the Trigger frame is the same (common).

That is, the PPDU format of each time resource is the same.

<Format Example 2>

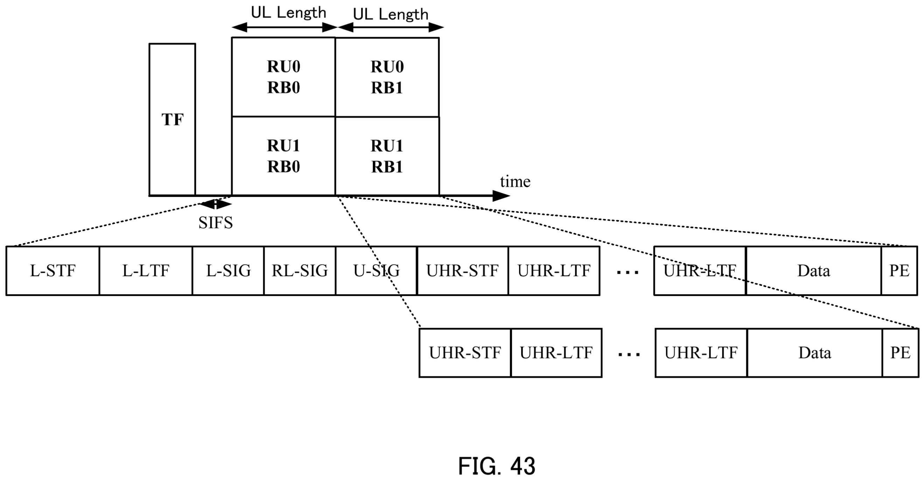

In Format Example 2, as illustrated in FIG. 43, the Preamble format of the response signal transmitted on each of the plurality of time resources indicated by the Trigger frame is different. That is, the PPDU format of each time resource varies.

For example, a defined existing Preamble format (for example, format defined in 11be) is applied to the first time-resource (RB0), and a format in which a part of the existing preamble is deleted is applied to the time resources different from the first time-resource (for example, RB1, RB2, ...). For example, as illustrated in FIG. 43, for the time resource different from the first time-resource (for example, RB1), fields from L-STF to U-SIG may be deleted, and a format including UHR-STF and UHR-LTF may be applied.

Note that the present disclosure is not limited to the example of FIG. 43, and for example, a format in which L-STF to UHR-STF are deleted and UHR-LTF is included may be adopted, or a format in which L-STF to UHR-LTF are deleted and Data and PE are included may be adopted.

In a case where the plurality of time resources is used by the same terminal 200, AP 100 can perform synchronization control with response signals or recognize the transmission parameters of the transmission data, by the response signal transmitted on the first time-resource. Therefore, in other time resources (for example, RB1, RB2, ...) different from the first time-resource (for example, RB0), the reception processing in AP 100 is not significantly affected even when the fields used for the synchronization control or the like are deleted. For example, by providing UHR-LTF and the like used for channel estimation in AP 100 in other time resources different from the first time-resource, the channel estimation accuracy can be improved as compared to a case where all the preambles are not included those other time resources.

<Format Example 3>

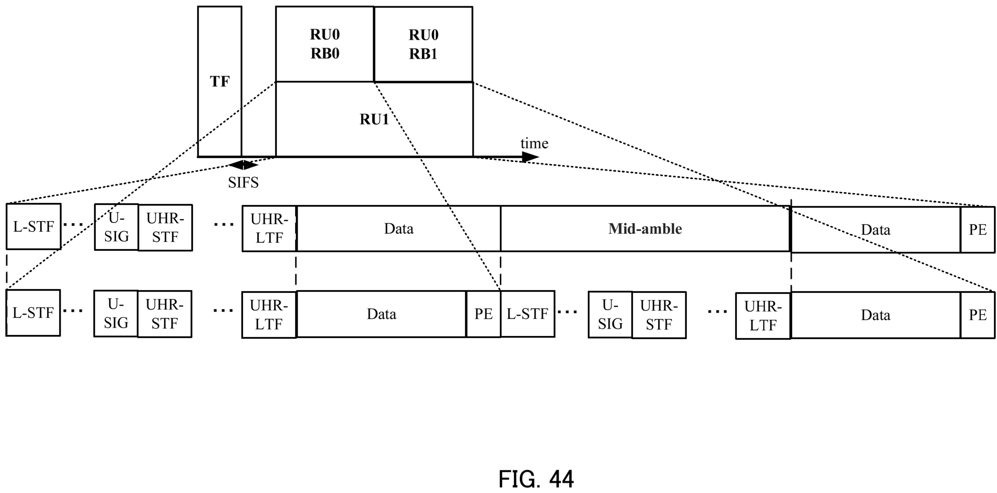

In Format Example 3, as illustrated in FIG. 44, the Preamble format of the response signal transmitted on each of the plurality of time resources (for example, RB0 and RB1) indicated by the Trigger frame is the same (common).

In addition, as illustrated in FIG. 44, in a case where the number of time resources (for example, the number of transmissions) is different between RUs, the response signal transmitted on the RU having a long duration (for example, RU1) uses a format in which a mid-amble is transmitted in accordance with the transmission timing of the Preamble of the response signal transmitted on the RU having a short duration (for example, RU0). In the example illustrated in FIG. 44, in the PPDU of RU1, the mid-amble is positioned in accordance with the Preamble of the PPDU transmitted on RB1 of RU0.

For example, the same format as the Preamble may be used as the mid-amble. Alternatively, as the mid-amble, a sequence obtained by matching the symbol lengths and the FFT sizes of the Preamble fields may be used. The sequence may, for example, be composed of L-LTF or UHR-LTF.

As described above, by transmitting, as the mid-amble, the signal having the same symbol lengths and the same FFT sizes in the Preamble field transmitted on each time resource, AP 100 can suppress the interference caused by the difference in the symbol length or the FFT size even when the reception processing is performed collectively on all the RUs (for example, performing FFT processing collectively on all the RUs).

<Format Example 4>

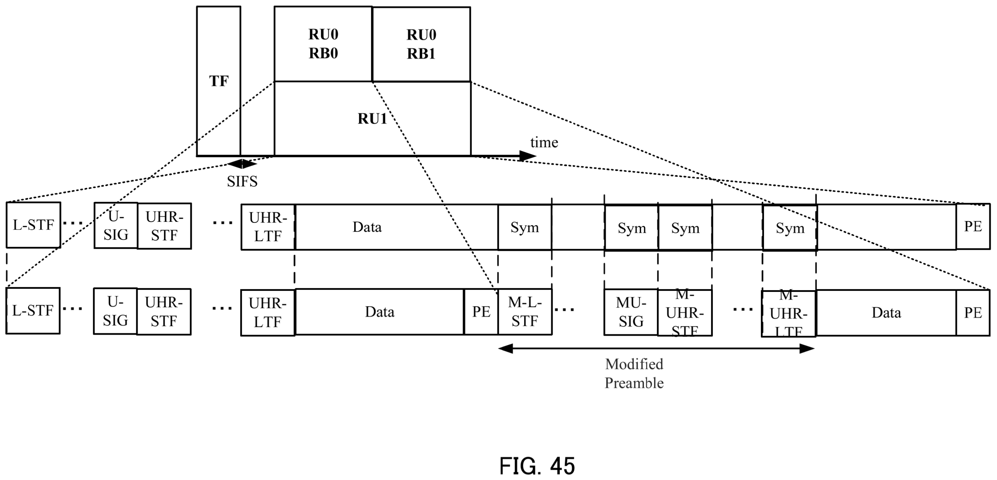

In Format Example 4, as illustrated in FIG. 45, in a case where the number of time resources (for example, the number of transmissions) is different between RUs, the Preamble format of the response signal transmitted on the first time-resource (for example, RB0) indicated by the Trigger frame is the same as the Preamble format of the response signal transmitted on the RU (for example, RU1) having a long duration.

Meanwhile, a special (changed) format (for example, referred to as Modified Preamble) is applied to the Preamble of the response signal transmitted in the later time resource (for example, RB1, RB2, ...) indicated by the Trigger frame.

For example, as illustrated in FIG. 45, in RB1 of RU0, M-L-STF, ..., M-U-SIG, M-UHR-STF, and M-UHR-LTF transmitted as the Modified Preamble may be configured with the same symbol length as the OFDM symbol length of the data portion of RU1. Alternatively, the Modified Preamble may be formed entirely of UHR-LTFs (4x-LTF, with the GI length being the same as that of Data).

In addition, the Modified Preamble may be composed of, for example, UHR-STF and UHR-LTF, and UHR-STF may be configured with the same length as the Data symbol length.

For example, in 11be, UHR-STF of 8 us is configured by repeating the sequence of 1.6 us five times. In contrast, UHR-STF (M-UHR-STF) in the Modified Preamble may be a sequence of 12.8 us, which has the same length as the Data symbol length, by repeating the 1.6 us sequence eight times.

As described above, by transmitting the signal having the same symbol length and the same FFT size in the Preamble field transmitted on each time resource, even when the reception processing is performed collectively on all the RUs (for example, performing FFT processing collectively on all the RUs), AP 100 can suppress the interference caused by the difference in the symbol length or the FFT size.

The examples of the formats of the Preamble and the mid-amble have been described above.

As described above, in the present embodiment, AP 100 determines one Trigger frame including time resource information related to a plurality of time resources (for example, RBs) used for transmission of a plurality of uplink response signals, respectively, and transmits the Trigger frame. In addition, terminal 200 receives the one Trigger frame including the time resource information related to the plurality of time resources and controls the transmission of uplink response signals based on the Trigger frame.

Accordingly, when indicating the transmission of the plurality of uplink response signals using one Trigger frame, the plurality of time resources can be appropriately configured and the plurality of time resources can be appropriately signaled.

Therefore, according to the present embodiment, the efficiency of the transmission control in radio communication can be improved.

(Embodiment 2)

In Embodiment 1, the case where a plurality of time resources is assigned to the same terminal has been described, but for example, there is a possibility that some of the assigned plurality of resources are not used because the terminal holds less data. Not using the some of the plurality of assigned resources possibly causes deterioration of the resource utilization efficiency.

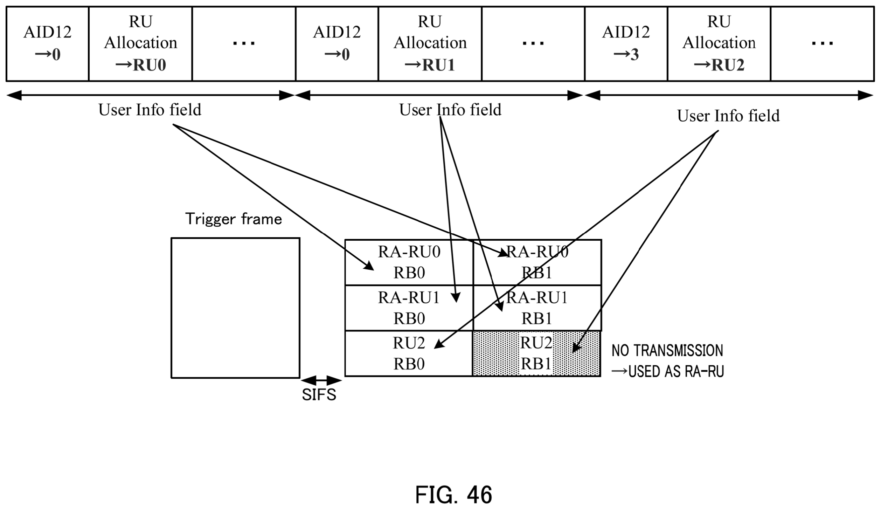

For example, as illustrated in FIG. 46, the Trigger frame indicates transmission of a response signal from the terminal with AID12=3 on RB0 and RB1 of RU2 (for example, indication of data transmission by specifying Basic as a Trigger Type). In this case, the terminal transmits the response signal using RB0 of RU2, no data to be transmitted is left, there is no data to be transmitted on RB1, and thus the resource of RB1 is unused (for example, available resource).

In the present embodiment, for example, a method will be described in which the resource utilization efficiency is improved by replacing one or some of the time resources occurred when a plurality of time resources is assigned to a terminal for which AID is specified, but the one or some of the time resource are possibly unused, with resources for random access.

Note that, in FIG. 46, the terminal may transmit the same data as RB0 of RU2 on RB1 even when there is no data to be transmitted using RB1 of RU2. By transmitting the same data on the plurality of time resources, the effect of diversity reception can be obtained.

The configuration of AP 100 according to the present embodiment may be the same as the configuration in Embodiment 1.

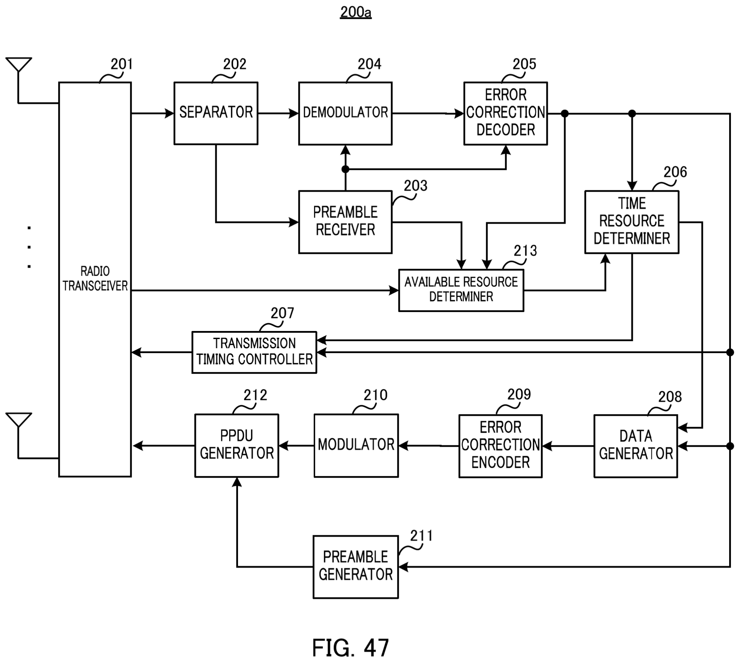

FIG. 47 is a block diagram illustrating a configuration example of terminal 200a according to the present embodiment. The configuration of terminal 200a is different from the configuration of terminal 200 according to Embodiment 1 in that radio transceiver 201, Preamble receiver 203, error correction decoder 205, and time resource determiner 206 operate differently, and available resource determiner 213 is added.

Radio transceiver 201 receives a reception signal via antennas, for example, performs radio reception processing such as down-conversion and A/D conversion on the reception signal, and outputs the signal after the radio reception processing to separator 202. In addition, radio transceiver 201 determines, by carrier sensing or the like, whether another terminal is transmitting, and outputs the determination result of whether another terminal is transmitting, to available resource determiner 213.

Preamble receiver 203 demodulates and decodes the Preamble signal from separator 202, and in a case where the signal is addressed to terminal 200a, indicates decoding of the data to demodulator 204, and outputs control information (for example, MCS) used for the decoding to demodulator 204 and error correction decoder 205. In addition, Preamble receiver 203 receives the Preamble of the response signal transmitted by another terminal, and outputs the Preamble to available resource determiner 213.

Error correction decoder 205 decodes, for example, the demodulated signal input from demodulator 204, and in a case where the decoded signal includes a Trigger frame, outputs the control information included in the Trigger frame to time resource determiner 206, data generator 208, and available resource determiner 213. Note that the coding rate applied in error correction decoder 205 may be determined, for example, in accordance with the scheduling information of AP 100 input from Preamble receiver 203.

Available resource determiner 213 determines an available resource based on, for example, at least one of the determination of whether another terminal is transmitting input from radio transceiver 201, the Preamble information of the response signal of another terminal input from Preamble receiver 203, and/or the Trigger frame input from error correction decoder 205. Note that an example of a method for determining the available resource in available resource determiner 213 will be described later. Available resource determiner 213 detects, for example, an available resource that can be used for random access, and outputs the available resource to time resource determiner 206.

Time resource determiner 206 determines a time resource available for transmission by terminal 200a based on the information included in the Trigger frame or the resources available for random access input from available resource determiner 213. For example, time resource determiner 206 performs OBO control when the resource is a time resource for which the AID of terminal 200a is specified or a random access resource, and selects a resource that can be used for random access transmission when the OBO counter becomes 0. Time resource determiner 206 outputs the information on whether transmission is possible, to data generator 208 when data transmission is possible.

[Method for Determining Available Resource]

Next, an example of a method for determining an available resource in available resource determiner 213 will be described.

For example, when there is an available resource, available resource determiner 213 uses the available resource as a resource for random access. For example, available resource determiner 213 treats the available resource in the same manner as the RU to which AID = 0 or 2045 is configured.

Whether to use the available resource as an RA-RU for AID12 = 0 (for example, resource for associated terminal) or as an RA-RU for AID12 = 2045 (for example, resource for unassociated terminal) may be defined in the specification, or may be indicated by another control information or the Trigger frame.

In addition, for example, the parameters such as RA-RU information and MCS when using the unused resource as an random access resource may be defined in advance in the specification, or may be configured based on the information indicated by the User Info field of another RA-RU (for example, User Info field in which AID12 is set to 0 or 2045). In a case where a plurality of User Info fields is present for RA-RU, the parameters may be configured based on the information of the User Info field positioned first or last in the User Info List field. In addition, for example, it may be explicitly indicated to terminal 200a via the Reserved subfield of the User Info field that the parameters such as the RA-RU information and the MCS configured in the User Info field of the RA-RU may be used for the available resource.

According to the present embodiment, by using the available resource as the resource for random access, the resource utilization efficiency is improved, and the system performance can be improved.

<Available Resource Determination Method 1>

In a case where the plurality of time resources is indicated by the Trigger frame and it is determined that one or some of the resources are not used, terminal 200a indicates that the subsequent time resource is not used, by using a U-SIG field (for example, Reserved subfield) of the response signal. The subfield for indicating that the time resource is not used (or is an available resource) may be, for example, referred to as a "More Time Resource Flag subfield," or may be referred to by another name.

For example, when the set value of the More Time Resource Flag subfield is 0, the subsequent time resource is unused, and when the set value is 1, the subsequent time resource is used.

Terminal 200a decodes, for example, the More Time Resource Flag subfield in the U-SIG of the response signal transmitted from another terminal, and determines whether the time resource is an available resource, according to the set value.

<Available Resource Determination Method 2>

Terminal 200a performs carrier sensing in the time resource for which AID12 is specified (for example, time resource that is not for random access) among the plurality of time resources indicated by the Trigger frame, and determines the next time resource as an available resource when it is determined that the response signal is not transmitted on the time resource.

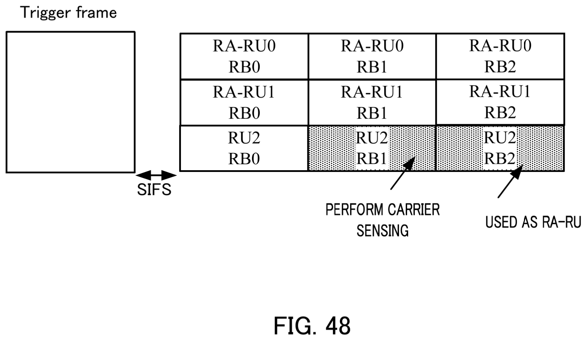

FIG. 48 illustrates an example of Available Resource Determination Method 2.

In FIG. 48, RB1 and RB2 of RU2 are available resources. In this case, terminal 200a performs carrier sensing at any timing in RB1, and when RB1 of RU2 is determined as an available resource, uses RB2 of RU2 which is the time resource at the next timing as a resource for random access.

<Available Resource Determination Method 3>

Terminal 200a determines whether each time resource is an available resource based on information indicated by the Trigger frame.

For example, AP 100 indicates the number of the plurality of time resources using the Trigger frame. At this time, AP 100 explicitly instructs terminal 200a to allocate one or some of the plurality of time resources (or not to allocate resources in other time resources, or indicate that other time resources are available resources). AP 100 may determine whether to use the one or some of the time resources for the resource allocation, for example, based on the amount of data held by terminal 200a from a buffer status report (BSR) or the like.

In a case where it is determined that there is a resource that is not used, based on the information indicated by the Trigger frame, terminal 200a may use the time resource as a resource for random access.

As a method for indicating the available resource by the Trigger frame, for example, the number of time resources may be indicated by the Common Info field, and the number of resources or the resource number used by terminal 200a specified using AID12 may be indicated by the User specific Info field. For example, in a case where the Common Info field indicates that the number of time resources is 3 (for example, RB0, RB1, and RB2) and the User specific Info field indicates the resource numbers (for example, RB0 and RB1), terminal 200a determines that the resource is not assigned to any of terminals 200a (for example, RB2 is available resource) based on these pieces of information, and uses RB2 as a resource for random access.

The method for determining the available resource has been described above.

(Embodiment 3)

For example, the standards up to 11be do not define the OBO control in a case where a plurality of resources for random access (for example, RA-RU) is present in the time domain when the Trigger frame indicates a plurality of time resources with different timings. Therefore, in the present embodiment, a method for controlling OBO in a case where a plurality of time resources is indicated will be described.

The configurations of AP 100 and terminal 200 according to the present embodiment are the same as the configurations in Embodiment 1.

A method for controlling OBO in terminal 200 (for example, time resource determiner 206) will be described below.

[OBO Control Method 1]

In OBO Control Method 1, terminal 200 performs control of OBO counter and resource selection for each of the plurality of time resources indicated by the Trigger frame.

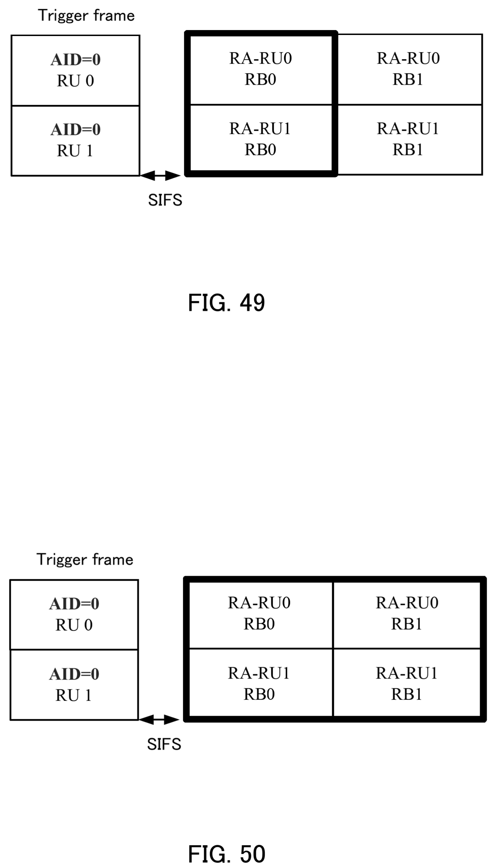

FIG. 49 illustrates an example of OBO Control Method 1. In the example of FIG. 49, the number of RA-RUs is 2 (for example, RU0 and RU1), and the number of time resources is 2 (for example, RB0 and RB1).

For example, in a case where the value of Initial OBO counter is 3, terminal 200 checks, on RB0, the number of RA-RUs indicated by the Trigger frame. Since the number of RA-RUs in RB0 is 2, terminal 200 subtracts 2 from OBO counter = 3 (OBO counter = 3 - 2 = 1). The value of the OBO counter is not 0 or less, and thus terminal 200 does not select a resource from RB0.

Subsequently, terminal 200 checks, on RB1 the number of RA-RUs indicated by the Trigger frame. Since the number of RA-RUs in RB1 is 2, terminal 200 subtracts 2 from the OBO counter (OBO counter = 1 - 2 = -1). The value of the OBO counter is 0 or less, and thus terminal 200 randomly selects one resource from RU0 or RU1 of RB1 and transmits the response signal.

Note that, in a case where the OBO counter is 0 or less in RB0 and terminal 200 selects a resource, terminal 200 may re-select the Initial OBO counter and perform the control of OBO counter in RB1. In this case, when the re-selected OBO counter becomes 0 in RB1, terminal 200 may transmit response signals using the plurality of time resources of RB0 and RB1.

As described above, by performing the control of OBO counter for each time resource, terminal 200 can select a plurality of time resources and can transmit a large amount of data early.

[OBO Control Method 2]

In OBO Control Method 2, terminal 200 performs control of OBO counter and resource selection for the entire plurality of time resources indicated by the Trigger frame.

FIG. 50 illustrates an example of OBO Control Method 2. In the example of FIG. 50, the number of RA-RUs is 2 (for example, RU0 and RU1), and the number of time resources is 2 (for example, RB0 and RB1).

For example, in a case where the value of the Initial OBO counter is 3, terminal 200 checks, on RB0 and RB1, the number of RA-RUs indicated by the Trigger frame. Since the number of RA-RUs is 2 and the number of time resources is 2, and there is a total of 4 RA-RUs, terminal 200 subtracts 4 from the OBO counter (OBO counter = 3 - 4 = -1). The value of the OBO counter becomes 0 or less, and thus terminal 200 randomly selects one resource from all the RA-RUs (4 RA-RUs in FIG. 50) and transmits the response signal.

As described above, by performing the control of OBO counter for the entire plurality of time resources, terminal 200 can disperse resources to be selected and can reduce the probability of collision caused by the selection of the same resource between terminals.

The method for controlling OBO has been described above.

For example, as described in Signaling Method 4 in Embodiment 1, in a case where the time resources of one or some of RA-RUs are configured as dedicated resources for terminal 200 satisfying a predetermined condition (for example, terminal that holds low latency traffic), there may be a case where OBO control prevents low latency traffic data from being transmitted early.

Then, hereinafter, an OBO control method for low latency traffic will be described. Note that the OBO control method for low latency traffic may be applied to a dedicated resource for terminal 200 that holds low latency traffic, or may be applied to a dedicated resource with another condition described in Signaling Method 4.

Increasing the probability that terminal 200 can select a resource in the resource dedicated to low latency traffic allows for early transmission of low latency traffic.

[OBO Control Method 1 for Low Latency Traffic]

For the resource dedicated to low latency traffic, terminal 200 does not perform OBO control. For example, terminal 200 always sets the OBO counter to 0 to select a resource.

[OBO Control Method 2 for Low Latency Traffic]

For the resource dedicated to low latency traffic, terminal 200 applies a parameter of OCW different from that of another resource (for example, normal resource) to the dedicated resource.

As the parameter of OCW, for example, "EOCWmin" and "EOCWmax" can be configured in the UORA Parameter Set element. For example, terminal 200 may configure the Initial OBO counter within a range of EOCWmin and EOCWmax.

For example, the EOCWmin and EOCWmax applied to the resource dedicated to low latency traffic and the EOCWmin and EOCWmax applied to normal resources can be configured to be different values. For example, for the resources dedicated to low latency traffic, lower values may be configured to the EOCWmin and EOCWmax than those for normal resources. As a result, the initial OBO counter tends to take a smaller value, making the OBO counter more likely to become 0 or less, which facilitates terminal 200 selecting a resource for low latency traffic and early transmitting the response signal.

[OBO Control Method 3 for Low Latency Traffic]

In the OBO counter control, terminal 200 performs the same control for all of AID12 = 0, 2045 and AID12 (for example, 2049) specified for a dedicated resource assigned to a terminal that satisfies a predefined condition.

For example, in the existing method, the OBO counter control is individually performed on the RA-RU specified by each AID12. For example, terminal 200 associated with AP 100 performs OBO counter control on the RA-RU specified by AID12 = 0 and does not perform OBO counter control on other RA-RUs. Similarly, terminal 200 that is not associated with AP 100 performs OBO counter control on the RA-RU specified by AID12 = 2045 and does not perform OBO counter control on other RA-RUs.

On the other hand, in OBO Control Method 3 for low latency traffic, terminal 200 controls one OBO counter for all the RA-RUs specified by AID12 = 0, 2045, and 2049, and randomly selects a resource from the RA-RUs specified by AID12 = 0, 2045, and 2049 when the OBO counter becomes 0 or less.

As a result, terminal 200 is likely to have the OBO counter of 0 or less for the resource dedicated to low latency traffic and easily selects a resource, which allows for early transmission of the response signal.

The embodiments of the present disclosure have been each described, thus far.

In addition, the field (subfield) used for indication of the control information is merely an example, and another field or subfield may be used. In addition, the number of bits used for the indication of the control information in each field or subfield is merely an example, and another number of bits may be used.

In addition, the format of the signal described in each of the above embodiments is merely an example, and another configuration may be employed in which at least one of the addition of another field and the deletion of some of the fields is performed, or another configuration may be employed in which at least one of the addition of another subfield and the deletion of some of the subfields is performed in any of the above-described fields.

Furthermore, in each embodiment described above, as an example, a case based on the format defined in IEEE 802.11 has been described, but the format to which an embodiment of the present disclosure is applied is not limited to the format of IEEE 802.11.

In addition, the parameters (for example, the number of RUs and the number of RBs) used in the above-described embodiments are merely examples, and other values may be applied.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to an embodiment of the present disclosure includes: control circuitry, which, in operation, determines one control signal including information related to a plurality of time resources used for transmission of a plurality of uplink response signals, respectively; and transmission circuitry, which, in operation, transmits the control signal.

In the embodiment of the present disclosure, the plurality of time resources are consecutive time resources, and a duration of each of the plurality of time resources is a duration indicated by the control signal.

In the embodiment of the present disclosure, the plurality of time resources are time resources separated from each other by a defined time interval, and a duration of each of the plurality of time resources is a duration indicated by the control signal.

In the embodiment of the present disclosure, an ACK or a block ACK is positioned between the plurality of time resources, and a duration of each of the plurality of time resources is a duration indicated by the control signal.

In the embodiment of the present disclosure, the plurality of time resources are consecutive time resources, and a duration of each of the plurality of time resources has a length obtained by dividing a duration indicated by the control signal by a number of the plurality of time resources.

In the embodiment of the present disclosure, the plurality of time resources are time resources separated from each other by a defined time interval, and a duration of each of the plurality of time resources has a length obtained by dividing a duration indicated by the control signal by a number of the plurality of time resources.

In the embodiment of the present disclosure, an ACK or a Block ACK signal is positioned between the plurality of time resources, and a duration of each of the plurality of time resources has a length obtained by dividing a duration indicated by the control signal by a number of the plurality of time resources.

In the embodiment of the present disclosure, one or some of the plurality of time resources overlap, and a duration of each of the plurality of time resources is a duration indicated by the control signal or has a length obtained by dividing the duration indicated by the control signal by a number of the plurality of time resources.

In the embodiment of the present disclosure, a Preamble for each of the plurality of uplink response signals respectively transmitted on the plurality of time resources is positioned in a first time-resource among the plurality of time resource.

In the embodiment of the present disclosure, formats of the plurality of uplink response signals respectively transmitted on the plurality of time resources are the same.

In the embodiment of the present disclosure, formats of the plurality of uplink response signals respectively transmitted on the plurality of time resources vary.

In the embodiment of the present disclosure, the information includes information related to a number of the plurality of time resources.

In the embodiment of the present disclosure, the information is indicated in a Reserved field in a Special User Info field or a Common Info field.

In the embodiment of the present disclosure, for a certain frequency resource, at least one of a terminal that uses each of the plurality of time resources and/or a transmission parameter for each of the plurality of time resources is common.

In the embodiment of the present disclosure, for a certain frequency resource, a terminal that uses each of the plurality of time resources and a transmission parameter for each of the plurality of time resources are individually configured.

In the embodiment of the present disclosure, positions of the plurality of time resources are determined from an order of User Info fields to which the same frequency resource is configured.

In the embodiment of the present disclosure, a number of the plurality of time resources is indicated in a User Info field in which a specific AID is configured, in a User Info List.

In the embodiment of the present disclosure, the information includes information related to a number of the plurality of time resources and information related to positions of the plurality of time resources.

In the embodiment of the present disclosure, the information related to the positions is indicated in either a User Info field or a Trigger Dependent User Info field.

In the embodiment of the present disclosure, the information related to the positions is indicated in a part of a Modulation and Coding Scheme (MCS) field or a UL Target Received Signal Strength Indicator (RSSI) field.

In the embodiment of the present disclosure, the information includes information related to start positions and lengths of the plurality of time resources.

In the embodiment of the present disclosure, one or some of the plurality of time resources are used by a terminal satisfying a predefined condition.

In the embodiment of the present disclosure, the one or some of the plurality of time resources are indicated by a User Info field in which terminal identification information indicates a specific value among User Info fields included in the control signal.

In the embodiment of the present disclosure, the one or some of the plurality of time resources are determined based on an order in which the plurality of time resources are indicated in the control signal.

In the embodiment of the present disclosure, the one or some of the plurality of time resources are indicated by a Reserved field of a User Info field.

In the embodiment of the present disclosure, the one or some of the plurality of time resources are indicated in a User Info field in which terminal identification information is a specific value, by information in a bitmap format for each of the plurality of time resources.

In the embodiment of the present disclosure, a backoff counter for random access is controlled for each of the plurality of time resources.

In the embodiment of the present disclosure, a backoff counter for random access is controlled across the plurality of time resources.

A terminal according to an embodiment of the present disclosure includes: reception circuitry, which, in operation, receives one control signal including information related to a plurality of time resources used for transmission of a plurality of uplink response signals, respectively; and control circuitry, which, in operation, controls transmission of the plurality of uplink response signals based on the control signal.

In a communication method according to an embodiment of the present disclosure, an access point determines one control signal including information related to a plurality of time resources used for transmission of a plurality of uplink response signals, respectively, and transmits the control signal.

In a communication method according to an embodiment of the present disclosure, a terminal receives one control signal including information related to a plurality of time resources used for transmission of a plurality of uplink response signals, respectively, and controls transmission of the plurality of uplink response signals based on the control signal.

The disclosure of Japanese Patent Application No. 2023-110985, filed on July 5, 2023, including the specification, drawings and abstract, is incorporated herein by reference in its entirety.

Industrial Applicability

An exemplary embodiment of the present disclosure is useful for radio communication systems.

Reference Signs List

100 AP
101 Time resource controller
102 Scheduler
103 Terminal-common information generator
104 Terminal-specific information generator
105 TF generator
106, 209 Error correction encoder
107, 210 Modulator
108, 211 Preamble generator
109, 212 PPDU generator
110, 201 Radio transceiver
111, 202 Separator
112, 203 Preamble receiver
113, 204 Demodulator
114, 205 Error correction decoder
200, 200a Terminal
206 Time resource determiner
207 Transmission timing controller
208 Data generator
213 Available resource determiner

**Claims**

1. An access point, comprising:

   control circuitry, which, in operation, determines one control signal including information related to a plurality of time resources used for transmission of a plurality of uplink response signals, respectively; and
   transmission circuitry, which, in operation, transmits the control signal.

2. The access point according to claim 1, wherein

   the plurality of time resources are consecutive time resources, and
   a duration of each of the plurality of time resources is a duration indicated by the control signal.

3. The access point according to claim 1, wherein

   the plurality of time resources are time resources separated from each other by a defined time interval, and
   a duration of each of the plurality of time resources is a duration indicated by the control signal.

4. The access point according to claim 1, wherein

   an ACK or a block ACK is positioned between the plurality of time resources, and
   a duration of each of the plurality of time resources is a duration indicated by the control signal.

5. The access point according to claim 1, wherein

the plurality of time resources are consecutive time resources, and
a duration of each of the plurality of time resources has a length obtained by dividing a duration indicated by the control signal by a number of the plurality of time resources.

6. The access point according to claim 1, wherein

the plurality of time resources are time resources separated from each other by a defined time interval, and
a duration of each of the plurality of time resources has a length obtained by dividing a duration indicated by the control signal by a number of the plurality of time resources.

7. The access point according to claim 1, wherein

one or some of the plurality of time resources overlap, and
a duration of each of the plurality of time resources is a duration indicated by the control signal or has a length obtained by dividing the duration indicated by the control signal by a number of the plurality of time resources.

8. The access point according to claim 1, wherein
formats of the plurality of uplink response signals respectively transmitted on the plurality of time resources vary.

9. The access point according to claim 1, wherein
for a certain frequency resource, a terminal that uses each of the plurality of time resources and a transmission parameter for each of the plurality of time resources are individually configured.

10. The access point according to claim 1, wherein
a number of the plurality of time resources is indicated in a User Info field in which a specific AID is configured, in a User Info List.

11. The access point according to claim 1, wherein
one or some of the plurality of time resources are used by a terminal satisfying a predefined condition.

12. The access point according to claim 1, wherein
a backoff counter for random access is controlled for each of the plurality of time resources.

13. A terminal, comprising:

reception circuitry, which, in operation, receives one control signal including information related to a plurality of time resources used for transmission of a plurality of uplink response signals, respectively; and
control circuitry, which, in operation, controls transmission of the plurality of uplink response signals based on the control signal.

14. A communication method, comprising:

determining, by an access point, one control signal including information related to a plurality of time resources used for transmission of a plurality of uplink response signals, respectively; and
transmitting, by the access point, the control signal.

15. A communication method, comprising:

receiving, by a terminal, one control signal including information related to a plurality of time resources used for transmission of a plurality of uplink response signals, respectively; and
controlling, by the terminal, transmission of the plurality of uplink response signals based on the control signal.

| Frame Control | Duration | RA | TA | Common Info | User Info List | Padding | FCS |
|---|---|---|---|---|---|---|---|

MAC header

Octets: 2    2    6    6    8 or more    variable    variable    4

FIG. 1

FIG. 2

EP 4 742 791 A1

| B0 B11 | B12 B19 | B20 | B21 B24 | B25 | B26 B31 | B32 B38 | B39 | |
|---|---|---|---|---|---|---|---|---|
| AID12 | RU Allocation | UL FEC Coding Type | UL EHT-MCS | Reserved | SS Allocation/ RA-RU Information | UL Target Receive Power | PS160 | Trigger Dependent User Info |
| Bits: 12 | 8 | 1 | 4 | 1 | 6 | 7 | 1 | variable |

FIG. 3

EP 4 742 791 A1

| B0    B11 | B12  B14 | B15    B16 | B17     B20 | B21    B24 | B25    B36 | B37   B39 | |
|-----------|----------|-----------|-------------|------------|------------|-----------|---|
| AID12 | PHY Version Identifier | UL Bandwidth Extension | EHT Spatial Reuse 1 | EHT Spatial Reuse 2 | U-SIG Disregard And Validate | Reserved | Trigger Dependent User Info |
| Bits:     12 | 3 | 2 | 4 | 4 | 12 | 3 | variable |

FIG. 4

| AID12 subfield | Description |
|---|---|
| 0 | User Info field allocates one or more contiguous RA-RUs for associated STAs |
| 1-2007 | User Info field is addressed to an associated STA whose AID is equal to the value in the AID12 subfield |
| 2008-2044 | Reserved |
| 2045 | User Info field allocates one or more contiguous RA-RUs for unassociated STAs |
| 2046 | Unallocated RU |
| 2047-4094 | Reserved |
| 4095 | ~~Start of Padding field~~Disallowed in a User Info field as it indicates the start of the Padding field |

FIG. 5

Trigger frame 1
(random access)

STA1: Associated, AID=5
STA2: Associated, AID=7
STA3: Unassociated
STA4: Associated, AID=3

Frequency

| AID 0, RU 1 |
| AID 0, RU 2 |
| AID 0, RU 3 |
| AID 2045, RU 4 |
| AID 2045, RU 5 |
| AID 3, RU 6 |

SIFS

HE TB PPDU from STA1 (RU 2)

HE TB PPDU from STA4 (RU 6)

SIFS

Multi-STA BlockAck

Trigger frame 2
(random access)

Frequency

| AID 0, RU 1 |
| AID 0, RU 2 |
| AID 2045, RU 3 |
| AID 2045, RU 4 |
| AID 6, RU 5 |
| AID 12, RU 6 |

SIFS

HE TB PPDU from STA4 (RU 1)
HE TB PPDU from STA2 (RU 2)
HE TB PPDU from STA3 (RU 4)

SIFS

Multi-STA BlockAck

Time

After Trigger frame 1 reception

| | STA 1 | STA 2 | STA 3 | STA 4 |
|---|---|---|---|---|
| | Initial OBO = 3 | Initial OBO = 5 | Initial OBO = 4 | Initial OBO = 2 |
| RU 1 (AID = 0) | OBO – 3 = 0 (Randomly pick one of the random access RUs) | OBO – 3 = 2 | - | OBO = 2 |
| RU 2 (AID = 0) | | | | |
| RU 3 (AID = 0) | | | | |
| RU 4 (AID = 2045) | - | - | OBO – 2 = 2 | - |
| RU 5 (AID = 2045) | - | - | | - |
| RU 6 | - | - | - | Use this RU |
| | Select new OBO value | Resume OBO in next Trigger frame | Resume OBO in next Trigger frame | OBO unchanged |

After Trigger frame 2 reception

| | STA 1 | STA 2 | STA 3 | STA 4 |
|---|---|---|---|---|
| | New OBO = 4 | OBO = 2 | OBO = 2 | OBO = 2 |
| RU 1 (AID = 0) | OBO – 2 = 2 | OBO – 2 = 0 (Randomly pick one of the random access RUs) | - | OBO – 2 = 0 (Randomly pick one of the random access RUs) |
| RU 2 (AID = 0) | | | - | |
| RU 3 (AID = 2045) | - | - | OBO – 2 = 0 (Randomly pick one of the random access RUs) | - |
| RU 4 (AID = 2045) | - | - | | - |
| RU 5 | - | - | - | - |
| RU 6 | - | - | - | - |
| | Resume OBO in next Trigger frame | Select new OBO value | Select new OBO value | Select new OBO value |

FIG. 6

EP 4 742 791 A1

EP 4 742 791 A1

EHT−LTF symbol duration depends on the GI + LTF size

| 8 μs | 8 μs | 4 μs | 4 μs | 8 μs: 4 μs per symbol | 8 μs | | | | | |
|------|------|------|------|------|------|------|------|------|------|------|
| L−STF | L−LTF | L−SIG | RL−SIG | U−SIG | EHT−STF | EHT−LTF | ··· | EHT−LTF | Data | PE |

FIG. 7

100

| CONTROLLER | ←→ | TRANSMITTER |

FIG. 8

200

| CONTROLLER | ←→ | RECEIVER |

FIG. 9

FIG. 10

EP 4 742 791 A1

FIG. 11

FIG. 12

FIG. 13

FIG. 14

EP 4 742 791 A1

UL Length

| TF | RU0 RB0 | ACK /BA | RU0 RB1 |
|    | RU1 RB0 |         | RU1 RB1 |

SIFS        SIFS        SIFS        time

FIG. 15

FIG. 16

UL Length

| RU0 RB0 | RU0 RB1 |
| RU1 RB0 | RU1 RB1 |

TF

SIFS

time

FIG. 17

FIG. 18

Trigger frame

UL Length

| AID=0 RU 0 | | RA-RU0 RB0 | RA-RU0 RB1 | ⎫ |
| AID=0 RU 1 | | RA-RU1 RB0 | RA-RU1 RB1 | ⎬ MULTIPLE TRANSMISSIONS ONLY FOR RA-RUs |
| AID=3 RU 2 | | RU2 | | ⎭ |
| AID=4 RU 3 | | RU3 | | |

SIFS

FIG. 19

FIG. 20

FIG. 21

200

- 201 RADIO TRANSCEIVER
- 202 SEPARATOR
- 203 PREAMBLE RECEIVER
- 204 DEMODULATOR
- 205 ERROR CORRECTION DECODER
- 206 TIME RESOURCE DETERMINER
- 207 TRANSMISSION TIMING CONTROLLER
- 208 DATA GENERATOR
- 209 ERROR CORRECTION ENCODER
- 210 MODULATOR
- 211 PREAMBLE GENERATOR
- 212 PPDU GENERATOR

| AID12 | PHY Version Identifier | UL Bandwidth Extension | EHT Spatial Reuse 1 | EHT Spatial Reuse 2 | U-SIG Disregard And Validate | Reserved | Trigger Dependent User info |
|---|---|---|---|---|---|---|---|

**Number of Time Resources**

FIG. 22

| Trigger Type | UL Length | More TF | CS Required | UL BW | GI and HE/EHT-LTF Type/Triggered TXOP Sharing Mode | Reserved | Number of HE/EHT-LTF Symbols |
|---|---|---|---|---|---|---|---|

| Reserved | LDPC Extra Symbol Segment | AP TX Power | Pre-FEC Padding Factor | PE Disambigutiy | UL Spatial Reuse | Reserved | HE/EHT P160 |
|---|---|---|---|---|---|---|---|

FIG. 23

| AID12 =2048 | RU Allocaton | Number of Time Resources | . . . | AID12 | RU Allocaton | . . . | AID12 | RU Allocaton | . . . |

|←——————————— User Info field ———————————→|←——————————— User Info field ———————————→|←——————————— User Info field ———————————→|

FIG. 24

| AID12 =2048 | RU Allocaton =0 | Number of Time Resources | . . . | AID12 =2048 | RU Allocaton =1 | **Number of Time Resources** | . . . | AID12 | RU Allocaton | . . . |
|---|---|---|---|---|---|---|---|---|---|---|

| | User Info field | | | User Info field | | | User Info field | |
|---|---|---|---|---|---|---|---|---|

FIG. 25

EP 4 742 791 A1

| AID12 →0 | RU Allocation →**RU0** | ... | AID12 →0 | RU Allocation →**RU1** | ... | AID12 →3 | RU Allocation →**RU2** | ... |
|---|---|---|---|---|---|---|---|---|

User Info field ⟷ User Info field ⟷ User Info field

Trigger frame

UL Length    UL Length

SIFS

| RA-RU0 RB0 | RA-RU0 RB1 |
|---|---|
| RA-RU1 RB0 | RA-RU1 RB1 |
| RU2 RB0 | RU2 RB1 |

FIG. 26

FIG. 27

EP 4 742 791 A1

| AID12 →0 | RU Allocation →RU0 | . . . | AID12 →0 | RU Allocation →RU1 | . . . | AID12 →3 | RU Allocation →RU2 | . . . |
|---|---|---|---|---|---|---|---|---|

User Info field    User Info field    User Info field

Trigger frame

UL Length    UL Length

| RA-RU0 RB0 | RA-RU0 RB1 |
|---|---|
| RA-RU1 RB0 | RA-RU1 RB1 |
| RU2 RB0 | |

SIFS

FIG. 28

| AID12 | RU Allocation | UL FEC Coding Type | UE EHT-MCS | Reserved | SS Allocation/ RA-RU information | UL Target RSSI | PS160 | Trigger Dependent User info |
|---|---|---|---|---|---|---|---|---|

Time Index

FIG. 29

EP 4 742 791 A1

| AID12 →0 | RU Allocation →RU0 | · · · | **Time Index →0** | · · · | AID12 →0 | RU Allocation →RU0 | · · · | **Time Index →1** | · · · |

User Info field          User Info field

| AID12 →3 | RU Allocation →RU1 | · · · | **Time Index →0** | · · · | AID12 →3 | RU Allocation →RU1 | · · · | **Time Index →1** | · · · |

User Info field          User Info field

Trigger frame

| RA-RU0 RB0 | RA-RU0 RB1 |
| RU1 RB0 | RU1 RB1 |

SIFS

FIG. 30

| B0 | | B1 | B2 | | B4 | B5 | | B6 | | B7 |
|---|---|---|---|---|---|---|---|---|---|---|

| MPDU MU Spacing Factor | TID Aggregation Limit | Reserved | Preferred AC |
|---|---|---|---|

Bits: 2      3      1      2

Time Index

FIG. 31

| AID12 | RU Allocation | UL FEC Coding Type | UL UHR-MCS | Reserved | SS Allocation/ RA-RU information | UL Target RSSI | PS160 | Trigger Dependent User info |
|---|---|---|---|---|---|---|---|---|

| UL UHR-MCS | Time Index |
|---|---|

FIG. 32

| AID12 | RU Allocation | UL FEC Coding Type | UL UHR-MCS | Reserved | SS Allocation/ RA-RU information | UL Target RSSI | PS160 | Trigger Dependent User info |
|---|---|---|---|---|---|---|---|---|

| UL Target RSSI | Time Index |
|---|---|

FIG. 33

| UL Target Receive Power subfield | Description |
|---|---|
| **0-31** | The expected receive signal power, in units of dBm, is $\text{Target}_{pwr} = \textbf{-50} + \text{Fval}$, where Fval is the subfield value |
| **32** | The STA transmits the UHR TB PPDU at the STA's maximum transmit power for the assigned UHR-MCS. |

FIG. 34

EP 4 742 791 A1

| AID12 =2048 | RU Allocaton | Number of Time Resources | Start Timing#0 | Length#0 | Start Timing#1 | Length#1 | ... | Start Timing#N-1 | Length#N-1 | Reserved |
|---|---|---|---|---|---|---|---|---|---|---|

START POSITION AND RESOURCE DURATION

START POSITION AND RESOURCE DURATION

START POSITION AND RESOURCE DURATION

User Info field

N: NUMBER OF RESOURCES INDICATED BY "Number of Time Resources"

FIG. 35

| Start Timing Subfield Value | Description |
|---|---|
| 0 | 0 |
| 1 | UL LENGTH |

## FIG. 36

| Length Subfield Value | Description |
|---|---|
| 0 | UL LENGTH |
| 1 | UL LENGTH / 2 |

## FIG. 37

FIG. 38

EP 4 742 791 A1

| AID12 =0 | RU Allocaton | ... | AID12 =2049 | RU Allocaton | ... |
|---|---|---|---|---|---|

← User Info field →  ← User Info field →

Freq

RA-RU RB0

RA-RU RB1
(RESOURCE DEDICATED TO TERMINAL SATISFYING PREDETERMINED CONDITION)

time

FIG. 39

| AID12<br>=0 | . . . | **Reserved<br>=0** | . . . | AID12<br>=0 | . . . | **Reserved<br>=1** | . . . |
|---|---|---|---|---|---|---|---|

←———————— User Info field ————————→ ←———————— User Info field ————————→

Freq

RA-RU
RB0

RA-RU
RB1
(RESOURCE DEDICATED TO
TERMINAL SATISFYING
PREDETERMINED CONDITION)

time

FIG. 40

EP 4 742 791 A1

| AID12 =2050 | **Specific Resources Bitmap =01** | . . . | AID12 | RU Allocaton | . . . | AID12 | RU Allocaton | . . . |
|---|---|---|---|---|---|---|---|---|

← User Info field →    ← User Info field →    ← User Info field →

Freq

**RA-RU RB0**

**RA-RU RB1**
(RESOURCE DEDICATED TO TERMINAL SATISFYING PREDETERMINED CONDITION)

time

FIG. 41

EP 4 742 791 A1

FIG. 42

FIG. 43

FIG. 44

FIG. 45

EP 4 742 791 A1

| AID12 →0 | RU Allocation →RU0 | ... | AID12 →0 | RU Allocation →RU1 | ... | AID12 →3 | RU Allocation →RU2 | ... |

User Info field       User Info field       User Info field

Trigger frame

| RA-RU0 RB0 | RA-RU0 RB1 |
| RA-RU1 RB0 | RA-RU1 RB1 |
| RU2 RB0 | RU2 RB1 |

NO TRANSMISSION →USED AS RA-RU

SIFS

FIG. 46

EP 4 742 791 A1

FIG. 47

| RA-RU0 RB0 | RA-RU0 RB1 | RA-RU0 RB2 |
|---|---|---|
| RA-RU1 RB0 | RA-RU1 RB1 | RA-RU1 RB2 |
| RU2 RB0 | RU2 RB1 | RU2 RB2 |

PERFORM CARRIER SENSING

USED AS RA-RU

Trigger frame

SIFS

FIG. 48

Trigger frame

| AID=0<br>RU 0 |
|---|
| AID=0<br>RU 1 |

SIFS

| RA-RU0<br>RB0 | RA-RU0<br>RB1 |
|---|---|
| RA-RU1<br>RB0 | RA-RU1<br>RB1 |

FIG. 49

Trigger frame

| AID=0<br>RU 0 |
|---|
| AID=0<br>RU 1 |

SIFS

| RA-RU0<br>RB0 | RA-RU0<br>RB1 |
|---|---|
| RA-RU1<br>RB0 | RA-RU1<br>RB1 |

FIG. 50

## INTERNATIONAL SEARCH REPORT

| International application No. |
|---|
| **PCT/JP2024/022281** |

**A. CLASSIFICATION OF SUBJECT MATTER**

*H04W 72/0446*(2023.01)i; *H04W 24/10*(2009.01)i; *H04W 28/04*(2009.01)i; *H04W 28/18*(2009.01)i;
*H04W 72/1268*(2023.01)i
FI: H04W72/0446; H04W72/1268; H04W28/04 110; H04W28/18 110; H04W24/10

According to International Patent Classification (IPC) or to both national classification and IPC

**B. FIELDS SEARCHED**

Minimum documentation searched (classification system followed by classification symbols)

H04B7/24 - 7/26; H04W4/00 - 99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | OFINNO, Enhanced Trigger to Based Uplink Transmission [online], IEEE 802.11-22/1923r0, IEEE, 19 December 2022, pages 1-12, [retrieved on 5 August 2024], Internet<URL:https://mentor.ieee.org/802.11/dcn/22/11-22-1923-01-0uhr-enhanced-trigger-based-uplink-transmission.pptx> | 1, 3-4, 6, 8-9, 11-15 |
|  | pages 1-12 | |
| Y | pages 1-12 | 2, 5 |
| A | pages 1-12 | 7, 10 |
| Y | HUAWEI, Further Improve Latency Performance in 11be [online], IEEE 802.11-21/0670r0, IEEE, 20 April 2021, pages 1-13, [retrieved on 5 August 2024], Internet<URL:https://mentor.ieee.org/802.11/dcn/21/11-21-0670-00-00be-further-improve-latency-performance-in11be.pptx> | 2, 5 |
|  | pages 1-11 | |
| A | pages 1-11 | 1, 3-4, 6-15 |

✓ Further documents are listed in the continuation of Box C.      ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 August 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

77

## INTERNATIONAL SEARCH REPORT

International application No.

**PCT/JP2024/022281**

### C. DOCUMENTS CONSIDERED TO BE RELEVANT

| Category* | Citation of document, with indication, where appropriate, of the relevant passages | Relevant to claim No. |
|---|---|---|
| A | WO 2019/167439 A1 (PANASONIC INTELLECTUAL PROPERTY CORPORATION OF AMERICA) 06 September 2019 (2019-09-06) paragraphs [0046]-[0050], [0067]-[0071] | 1-15 |
| A | WO 2022/264571 A1 (PANASONIC INTELLECTUAL PROPERTY CORPORATION OF AMERICA) 22 December 2022 (2022-12-22) entire text, all drawings | 1-15 |

Form PCT/ISA/210 (second sheet) (July 2022)

INTERNATIONAL SEARCH REPORT

Information on patent family members

International application No.

**PCT/JP2024/022281**

| Patent document cited in search report | | | Publication date (day/month/year) | Patent family member(s) | | | Publication date (day/month/year) |
|---|---|---|---|---|---|---|---|
| WO | 2019/167439 | A1 | 06 September 2019 | US | 2021/0014695 | A1 | |
| | | | | paragraphs [0068]-[0073], [0091]-[0095] | | | |
| | | | | EP | 3761692 | A1 | |
| | | | | CN | 111727616 | A | |
| WO | 2022/264571 | A1 | 22 December 2022 | EP | 4358616 | A1 | |
| | | | | entire text, all drawings | | | |
| | | | | CN | 117413599 | A | |
| | | | | KR | 10-2024-0019141 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023110985 A

**Non-patent literature cited in the description**

- Enhanced Trigger-Based Uplink Transmission. *IEEE 802.11-22/1923r1*

- Latency Reduction Scheme for UHR. *IEEE 802.11-22/1393r0*